# EUROPEAN PATENT APPLICATION

(11) **EP 4 167 506 A1**
(43) Date of publication of application: **19.04.2023**
(21) Application number: 21842897.7
(22) Date of filing: 15.07.2021

(54) **IN-SITU FLOW DETECTION METHOD AND RELATED DEVICE**

(30) Priority: 17.07.2020 CN 202010694135
(71) Applicant: Huawei Technologies Co., Ltd., Longgang District, Shenzhen, Guangdong 518129 (CN)
(72) Inventor: BEN, Zhiyong, Shenzhen, Guangdong 518129 (CN); LI, Weidong, Shenzhen, Guangdong 518129 (CN)
(74) Representative: Thun, Clemens
(86) International application number: PCT/CN2021/106615
(87) International publication number: WO 2022/012646

(57) **Abstract**

This application discloses an in-situ flow detection method and a related device, and pertains to the field of communication technologies. The method includes: When a tunnel type of an uplink tunnel of a first node is inconsistent with a tunnel type of a downlink tunnel of the first node, the first node generates a second traffic detection header based on a first traffic detection header. Therefore, the first node can continue to send, to a next hop without using an IFIT indication delivered by a control node, a packet that carries a traffic detection header, so that in-situ flow detection across tunnels of different types is implemented. In this way, when in-situ flow detection needs to be performed on a data flow of a service, the control node does not need to deliver the IFIT indication to a head node of each subnet. It can be learned that in embodiments of this application, the in-situ flow detection can be performed at a granularity of an entire service, and does not need to be performed at a granularity of a subnet, so that flexibility and efficiency of the in-situ flow detection are improved.

## Description

Embodiments of this application claim priority to Chinese Patent Application No. 202010694135.8, filed on July 17, 2020 and entitled "IN-SITU FLOW DETECTION METHOD AND RELATED DEVICE", which is incorporated herein by reference in its entirety.

### TECHNICAL FIELD

This application relates to the field of communication technologies, and in particular, to an in-situ flow detection method and a related device.

### BACKGROUND

Currently, when detecting that traffic in a network does not meet a requirement of a service, a control node delivers an in-situ flow information telemetry (in-situ flow information telemetry, IFIT) indication to a head node in the network. The head node encapsulates an IFIT header into a packet based on the IFIT indication, and the IFIT header indicates information that needs to be collected by a subsequent node of the head node. After receiving the packet encapsulated with the IFIT header, the subsequent node collects information based on the IFIT header, and continues to forward the packet encapsulated with the IFIT header to a next hop, so that each node on a forwarding path of the packet collects information based on the IFIT header. The control node implements in-situ flow detection on the service based on the information collected by each node on the forwarding path of the packet.

In a related technology, a plurality of subnets are allowed in a network that carries a same service, and different types of subnets are allowed in the plurality of subnets. The different types of subnets are subnets with different tunnel types for packet transmission. Therefore, tunnels of different types are allowed on the forwarding path of the packet. Currently, formats of IFIT headers used in the different types of subnets are different. Therefore, when delivering the IFIT indication, the control node needs to separately deliver the IFIT indication to one or more head nodes in each of the plurality of subnets, to implement the in-situ flow detection in each subnet.

When the in-situ flow detection is performed on the service, the in-situ flow detection needs to be performed separately at a granularity of each subnet. As a result, both efficiency and flexibility of the in-situ flow detection are low.

### SUMMARY

This application provides an in-situ flow detection method and a related device, to improve flexibility of the in-situ flow detection method. Technical solutions are as follows.

According to a first aspect, an in-situ flow detection method is provided. In the method, a first node receives a packet sent by a second node, where the first node and the second node are two nodes in a network. When the packet includes a first traffic detection header and a tunnel type of an uplink tunnel of the packet is inconsistent with a tunnel type of a downlink tunnel of the packet, the first node generates a second traffic detection header based on the first traffic detection header, replaces the first traffic detection header in the packet with the second traffic detection header, and sends a packet including the second traffic detection header to a third node. The second traffic detection header is a traffic detection header supported by the downlink tunnel, the uplink tunnel is a tunnel between the second node and the first node, and the downlink tunnel is a tunnel between the first node and the third node.

In this application, when a tunnel type of an uplink tunnel of the first node is inconsistent with a tunnel type of a downlink tunnel of the first node, the first node can generate the second traffic detection header based on the first traffic detection header. Therefore, when in-situ flow detection is IFIT detection, the first node can continue to send, to a next hop without using an IFIT indication delivered by a control node, a packet that carries a traffic detection header, so that in-situ flow detection across tunnels of different types is implemented. In this way, when the in-situ flow detection needs to be performed on a data flow of a service, the control node does not need to deliver the IFIT indication to a head node of each subnet. It can be learned that in embodiments of this application, the in-situ flow detection can be performed at a granularity of an entire service, and does not need to be performed at a granularity of a subnet, so that flexibility and efficiency of the in-situ flow detection are improved.

Based on the in-situ flow detection method provided above, in a possible implementation, after the first node receives the packet sent by the second node, in the method, the first node first determines whether the packet includes the first traffic detection header, and when the packet includes the first traffic detection header, determines whether the tunnel type of the uplink tunnel of the packet is consistent with the tunnel type of the downlink tunnel of the packet.

When the packet does not include the first traffic detection header, it indicates that the in-situ flow detection does not need to be performed currently. Therefore, it is unnecessary to determine tunnel types of the uplink tunnel and the downlink tunnel. Therefore, in this embodiment of this application, whether there is the first traffic detection header is first determined, and then whether the tunnel types of the uplink tunnel and the downlink tunnel are consistent is determined, to improve the efficiency of the in-situ flow detection.

Based on the in-situ flow detection method provided above, in a possible implementation, the packet includes a first flag field, and a value of the first flag field indicates whether the in-situ flow detection is the in-situ flow detection across tunnels of different types. In this scenario, when the value of the first flag field indicates that the in-situ flow detection is the in-situ flow detection across tunnels of different types, an operation of determining whether the tunnel type of the uplink tunnel of the packet is consistent with the tunnel type of the downlink tunnel of the packet is performed.

Based on the in-situ flow detection method provided above, in a possible implementation, when the value of the first flag field indicates that the in-situ flow detection is in-situ flow detection for tunnels of a same type, the operation of determining whether the tunnel type of the uplink tunnel of the packet is consistent with the tunnel type of the downlink tunnel of the packet is not performed. The first node updates a value of a time to live TTL field in the first traffic detection header, and sends a packet including the updated first traffic detection header to the third node.

It should be noted that, when there is no first flag field, the first node needs to determine the tunnel types of the uplink tunnel and the downlink tunnel in any case. Therefore, to help a subsequent node identify that current in-situ flow detection is hybrid in-situ flow detection, the first flag field is extended in the packet, and the value of the first flag field indicates whether the in-situ flow detection is the in-situ flow detection across tunnels of different types. Therefore, only when the first flag field indicates that the in-situ flow detection is the in-situ flow detection across tunnels of different types, whether the tunnel types of the uplink tunnel and the downlink tunnel are consistent is determined, to perform the method provided in this application. When the first flag field does not indicate that the in-situ flow detection is the in-situ flow detection across tunnels of different types, the determining process does not need to be performed, and only the first traffic detection header needs to be updated. This improves flexibility of the in-situ flow detection method provided in this application.

Based on the in-situ flow detection method provided above, in a possible implementation, when the value of the first flag field indicates that the in-situ flow detection is the in-situ flow detection for tunnels of a same type, a microcode chip in the first node updates the value of the time to live TTL field in the first traffic detection header, and a downlink management chip in the first node sends the packet including the updated first traffic detection header to the third node.

Based on the in-situ flow detection method provided above, in a possible implementation, after the first node receives the packet sent by the second node, in the method, an uplink management chip adds an internal forwarding header to the packet, where the internal forwarding header includes a second flag field, and a value of the second flag field indicates whether the packet includes a traffic detection header. In this scenario, an implementation of determining whether the packet includes the first traffic detection header is as follows: The microcode chip determines, based on the value of the second flag field, whether the packet includes the first traffic detection header.

Based on the in-situ flow detection method provided above, in a possible implementation, when the value of the second flag field indicates that the packet includes the first traffic detection header, the internal forwarding header further includes a third flag field, and a value of the third flag field indicates the tunnel type of the uplink tunnel. In this scenario, an implementation of determining whether the tunnel type of the uplink tunnel of the packet is consistent with the tunnel type of the downlink tunnel of the packet may be as follows: The microcode chip determines, based on the value of the third flag field, whether the tunnel type of the uplink tunnel of the packet is consistent with the tunnel type of the downlink tunnel of the packet.

For any node, the node includes an uplink data management chip, a microcode chip, and a downlink data management chip. The microcode chip is configured to process a packet received by the uplink data management chip, and then send the processed packet to the downlink data management chip, to forward the packet. Therefore, in a possible implementation, to facilitate the microcode chip to quickly process the packet subsequently, the uplink management chip adds an internal forwarding header based on information about the packet, so that the microcode chip can quickly process the packet subsequently.

Based on the in-situ flow detection method provided above, in a possible implementation, in the method, when the packet includes the first traffic detection header and the tunnel type of the uplink tunnel of the packet is inconsistent with the tunnel type of the downlink tunnel of the packet, a link state packet is determined based on the first traffic detection header, where the link state packet includes a fourth flag field, and a value of the fourth flag field indicates that the uplink tunnel type of the first node and the downlink tunnel type of the first node are inconsistent; and the link state packet is sent to the control node.

In this way, the control node may determine, based on the fourth flag field, that the first node is an interworking (interworking) node, so that the control node may subsequently mark the feature of the first node in a network topology, so that a management person can quickly learn of the feature of the first node.

Based on the in-situ flow detection method provided above, in a possible implementation, an implementation process in which the first node generates the second traffic detection header based on the first traffic detection header is: determining a difference between a value of a time to live TTL field in the first traffic detection header and a reference value as a value of a TTL field in the second traffic detection header; and copying a value of another field that is in the first traffic detection header and that is the same as a field in the second traffic detection header to the second traffic detection header.

In the foregoing part, the value of the TTL field in the second traffic detection header is determined based on the value of the TTL field in the first traffic detection header. In this way, even if across subnets, when detection is performed on a same data flow, values of time to live of traffic detection headers in packets sent by nodes are continuous. In this way, another node such as the control node can quickly determine, based on the TLL value, the next hop of the first node.

Based on the in-situ flow detection method provided above, in a possible implementation, in the method, after whether the tunnel type of the uplink tunnel of the packet is consistent with the tunnel type of the downlink tunnel of the packet is determined, when the packet includes the first traffic detection header, and the tunnel type of the uplink tunnel of the packet is consistent with the tunnel type of the downlink tunnel of the packet, the first node updates a value of a time to live TTL field in the first traffic detection header, and sends a packet including the updated first traffic detection header to the third node.

If the foregoing determining result is met, only the TTL value in the first traffic detection header needs to be updated, and the second traffic detection header does not need to be regenerated.

Based on the in-situ flow detection method provided above, in a possible implementation, the first traffic detection header indicates to perform IFIT detection or internet protocol flow performance measurement IPFPM detection on a to-be-detected data flow.

The in-situ flow detection provided in this application may be applied to a plurality of types of in-situ flow detection, so that the flexibility of the method provided in this application is improved.

Based on the in-situ flow detection method provided above, in a possible implementation, the first flag field is a field in the first traffic detection header.

Based on the in-situ flow detection method provided above, in a possible implementation, when the first traffic detection header indicates that the in-situ flow detection is in-situ flow information telemetry IFIT detection, the first flag field is a field in a flow instruction extension header FIEH included in the first traffic detection header.

In the foregoing implementation, a possible extension source of the first flag field is listed, so that the flexibility of the method provided in this application is improved.

Based on the in-situ flow detection method provided above, in a possible implementation, the tunnel type includes a multiprotocol label switching MPLS tunnel and a segment routing over internet protocol version 6 SRv6 tunnel.

The tunnel type provided in this application may include a plurality of types of tunnels, so that the flexibility of the method provided in this application is improved.

According to a second aspect, an in-situ flow detection method is provided. In the method, a control node sends an in-situ flow detection request to an ingress node of a to-be-detected data flow in a network. When in-situ flow detection for the data flow is in-situ flow detection across tunnels of different types, the in-situ flow detection request indicates that the in-situ flow detection is the in-situ flow detection across tunnels of different types, and the being across tunnels of different types means that a tunnel type of an uplink tunnel of a node in a transmission path of the to-be-detected data flow is inconsistent with a tunnel type of a downlink tunnel of the node.

In this application, when the in-situ flow detection needs to be performed on a data flow of a service, the control node does not need to deliver an IFIT indication to a head node of each subnet, and only needs to deliver the IFIT indication to an ingress node of the data flow of the service. It can be learned that in embodiments of this application, the in-situ flow detection can be performed at a granularity of an entire service, and does not need to be performed at a granularity of a subnet, so that flexibility and efficiency of the in-situ flow detection are improved.

Based on the in-situ flow detection method provided above, in a possible implementation, when the in-situ flow detection for the data flow is in-situ flow detection for tunnels of a same type, the in-situ flow detection request indicates that the in-situ flow detection is the in-situ flow detection for tunnels of a same type.

The control node may deliver different in-situ flow detection requests based on different tunnel types, so that flexibility of the method provided in this application is improved.

Based on the in-situ flow detection method provided above, in a possible implementation, in the method, the control node obtains a tunnel type of a downlink tunnel of each node in the transmission path of the data flow; and when there are different tunnel types in the tunnel types of the downlink tunnels of the nodes, the in-situ flow detection for the data flow is determined to be the in-situ flow detection across tunnels of different types.

According to the foregoing implementation, whether there are tunnels of different types in a transmission path of a data flow can be accurately determined based on next-hop information reported by each node in the transmission path of the data flow, to determine whether a hybrid in-situ flow detection request needs to be delivered.

Based on the in-situ flow detection method provided above, in a possible implementation, the in-situ flow detection includes in-situ flow information telemetry IFIT detection or internet protocol flow performance measurement IPFPM detection.

Based on the in-situ flow detection method provided above, in a possible implementation, the tunnel type includes a multiprotocol label switching MPLS tunnel and a segment routing over internet protocol version 6 SRv6 tunnel.

According to a third aspect, an in-situ flow detection method is provided. In the method, an ingress node of a network receives an in-situ flow detection request delivered by a control node. When in-situ flow detection for a to-be-detected data flow is in-situ flow detection across tunnels of different types, the in-situ flow detection request indicates that the in-situ flow detection is the in-situ flow detection across tunnels of different types. The being across tunnels of different types means that a tunnel type of an uplink tunnel of a node in a transmission path of the to-be-detected data flow is inconsistent with a tunnel type of a downlink tunnel of the node. The hybrid in-situ flow detection request includes a flow identifier of the to-be-detected data flow. When receiving a packet indicated by the flow identifier, the ingress node adds a first traffic detection header to the packet, where the first traffic detection header indicates to perform the in-situ flow detection on the data flow indicated by the flow identifier.

In this application, when the in-situ flow detection needs to be performed on a data flow of a service, the control node does not need to deliver an IFIT indication to a head node of each subnet, and only needs to deliver the IFIT indication to an ingress node of the data flow of the service. It can be learned that in embodiments of this application, the in-situ flow detection can be performed at a granularity of an entire service, and does not need to be performed at a granularity of a subnet, so that flexibility and efficiency of the in-situ flow detection are improved.

Based on the in-situ flow detection method provided above, in a possible implementation, if the in-situ flow detection request indicates that the in-situ flow detection is the in-situ flow detection across tunnels of different types, a packet obtained through processing by the ingress node includes a first flag field, and a value of the first flag field indicates that the in-situ flow detection is the in-situ flow detection across tunnels of different types. Correspondingly, if the in-situ flow detection request indicates that the in-situ flow detection is in-situ flow detection for tunnels of a same type, the value of the first flag field added to the packet indicates that the in-situ flow detection is the in-situ flow detection for tunnels of a same type.

To help a subsequent node identify that current in-situ flow detection is hybrid in-situ flow detection, the first flag field is extended in the packet, and the value of the first flag field indicates whether the in-situ flow detection is the in-situ flow detection across tunnels of different types. This improves flexibility of the in-situ flow detection method provided in this application.

Based on the in-situ flow detection method provided above, in a possible implementation, the first traffic detection header indicates to perform IFIT detection or internet protocol flow performance measurement IPFPM detection on the to-be-detected data flow.

Based on the in-situ flow detection method provided above, in a possible implementation, the first flag field is a field in the first traffic detection header.

Based on the in-situ flow detection method provided above, in a possible implementation, when the first traffic detection header indicates that the in-situ flow detection is in-situ flow information telemetry IFIT detection, the first flag field is a field in a flow instruction extension header FIEH included in the first traffic detection header.

Based on the in-situ flow detection method provided above, in a possible implementation, the tunnel type includes a multiprotocol label switching MPLS tunnel and a segment routing over internet protocol version 6 SRv6 tunnel.

According to a fourth aspect, a network device is provided. The network device has a function of implementing a behavior of the first node in the in-situ flow detection method in the first aspect. The network device includes at least one module, and the at least one module is configured to implement the in-situ flow detection method provided in the first aspect.

According to a fifth aspect, a network device is provided. The network device has a function of implementing a behavior of the control node in the in-situ flow detection method in the second aspect. The network device includes at least one module, and the at least one module is configured to implement the in-situ flow detection method provided in the second aspect.

According to a sixth aspect, a network device is provided. The network device has a function of implementing a behavior of the ingress node in the in-situ flow detection method in the third aspect. The network device includes at least one module, and the at least one module is configured to implement the in-situ flow detection method provided in the third aspect.

According to a seventh aspect, a network device is provided. A structure of the network device includes a processor and a memory. The memory is configured to store a program that supports the network device in performing the in-situ flow detection method provided in the first aspect, the second aspect, or the third aspect, and store data used to implement the in-situ flow detection method provided in the first aspect, the second aspect, or the third aspect. The processor is configured to execute the program stored in the memory. An operation apparatus of a storage device may further include a communication bus, and the communication bus is configured to establish a connection between the processor and the memory.

According to an eighth aspect, a computer-readable storage medium is provided. The computer-readable storage medium stores instructions. When the instructions are run on a computer, the computer is enabled to perform the in-situ flow detection method in the first aspect, the second aspect, or the third aspect.

According to a ninth aspect, a computer program product including instructions is provided. When the computer program product runs on a computer, the computer is enabled to perform the in-situ flow detection method in the first aspect, the second aspect, or the third aspect.

According to a tenth aspect, a chip is provided. The chip includes a processor and a communication interface. The chip is configured to implement the in-situ flow detection method in the first aspect, the second aspect, or the third aspect.

According to an eleventh aspect, an in-situ flow detection system is provided, where the system includes a control node, an ingress node of a data flow, and a first node. The first node is a next-hop node of the ingress node.

The control node is configured to send an in-situ flow detection request to the ingress node. When in-situ flow detection for the data flow is in-situ flow detection across tunnels of different types, the in-situ flow detection request indicates that the in-situ flow detection is the in-situ flow detection across tunnels of different types. The being across tunnels of different types means that a tunnel type of an uplink tunnel of a node in a transmission path of a to-be-detected data flow is inconsistent with a tunnel type of a downlink tunnel of the node.

The ingress node is configured to receive the in-situ flow detection request delivered by the control node. The in-situ flow detection request includes a flow identifier of the to-be-detected data flow. When receiving a packet indicated by the flow identifier, the ingress node adds a first traffic detection header to the packet.

The first node is configured to receive a packet sent by the ingress node. When the packet includes a first traffic detection header and a tunnel type of an uplink tunnel of the packet is inconsistent with a tunnel type of a downlink tunnel of the packet, the first node generates a second traffic detection header based on the first traffic detection header, and replaces the first traffic detection header in the packet with the second traffic detection header. The second IFIT is a traffic detection header supported by the downlink tunnel, the uplink tunnel is a tunnel between the ingress node and the first node, and the downlink tunnel is a tunnel between the first node and a third node. The first node sends a packet including the second traffic detection header to the third node.

Technical effects obtained in the fourth aspect to the eleventh aspect are similar to corresponding technical effects obtained by one or more technical means in the first aspect. Details are not described herein again.

### BRIEF DESCRIPTION OF DRAWINGS

FIG. 1 is a schematic diagram of a network architecture according to an embodiment of this application;
FIG. 2 is a schematic diagram of another network architecture according to an embodiment of this application;
FIG. 3 is a flowchart of an in-situ flow detection method according to an embodiment of this application;
FIG. 4 is a schematic diagram of a format of an IFIT header according to an embodiment of this application;
FIG. 5 is a schematic diagram of another format of an IFIT header according to an embodiment of this application;
FIG. 6 is a schematic diagram of another format of an IFIT header according to an embodiment of this application;
FIG. 7 is a schematic diagram of another network architecture according to an embodiment of this application;
FIG. 8 is a schematic diagram of a structure of a network device according to an embodiment of this application;
FIG. 9 is a schematic diagram of a structure of another network device according to an embodiment of this application;
FIG. 10 is a schematic diagram of a structure of another network device according to an embodiment of this application;
FIG. 11 is a schematic diagram of a structure of another network device according to an embodiment of this application;
FIG. 12 is a schematic diagram of a structure of another network device according to an embodiment of this application; and
FIG. 13 is a schematic diagram of a structure of another network device according to an embodiment of this application.

### DESCRIPTION OF EMBODIMENTS

To make objectives, technical solutions, and advantages of this application clearer, the following further describes implementations of this application in detail with reference to the accompanying drawings.

Before embodiments of this application are explained and described in detail, an application scenario of embodiments of this application is first explained and described.

With advent of a 5th-generation mobile communication technology (5th generation mobile networks, 5G) era, a higher requirement is imposed on a transmission delay and reliability of a bearer network of a service. An intent-driven network (intent-driven network, IDN) emerges accordingly.

In the IDN, network maintenance evolves from complaint-driven maintenance to proactive perception and automatic recovery and optimization. Specifically, in the IDN, a control node detects end-to-end service quality in real time by using an in-band detection technology, where the end-to-end refers to an ingress to an egress of a data flow of a service. This in-band detection technology is also referred to as an in-band flow detection technology. The in-band detection technology detects only performance parameters of traffic on ingress and egress nodes, and then detects one or more indicators of traffic between two ends, such as a packet loss, retransmission, and a delay based on the performance parameters of traffic on ingress and egress nodes. After it is detected that one or more of the packet loss, the retransmission, and the delay between the two ends exceed a threshold, it is considered that a service fault exists currently. Subsequently, an operation such as fault location may be performed by using the in-situ flow detection technology. In the in-situ flow detection technology, a control node may automatically deliver an in-situ flow detection indication to perform hop-by-hop service detection, that is, to perform in-situ flow detection, to obtain information collected by each node in a transmission direction of a data flow. The control node locates a fault point based on the information collected by each node and performs automatic recovery and optimization. In an in-situ flow detection process, a head node needs to add a traffic detection header to a packet, so that a subsequent node performs the in-situ flow detection on traffic with a same feature. The same feature refers to a feature of a data flow indicated by the traffic detection header. In other words, the traffic detection header indicates a data flow on which the in-situ flow detection needs to be performed.

When the in-situ flow detection indication delivered by the control node is an IFIT indication, the traffic detection header added by the head node to a packet header is also referred to as an IFIT header. In addition, in this scenario, the IFIT indication is also referred to as an IFIT instance.

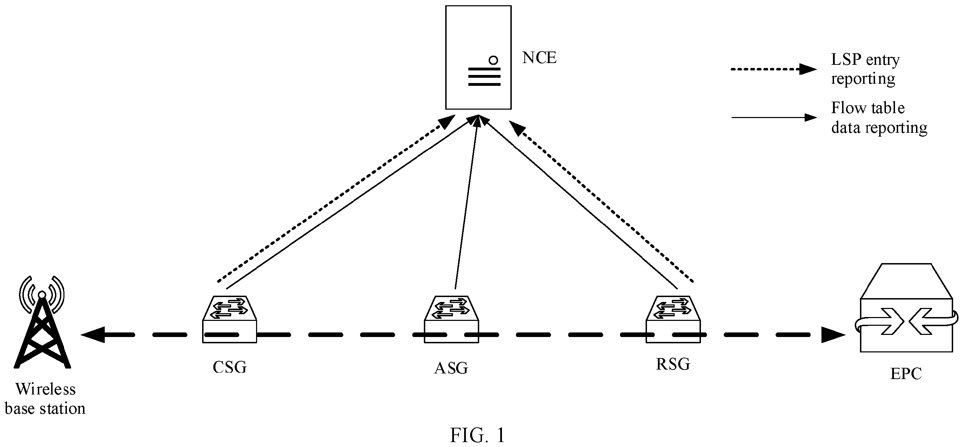

FIG. 1 is a schematic flowchart of in-situ flow detection according to an embodiment of this application. As shown in FIG. 1, a to-be-detected data flow is a data flow from a wireless base station (gNodeB) in a long term evolution (long term evolution, LTE) network to an evolved packet core (Evolved Packet Core, EPC) network. An ingress node of the data flow transmitted in the network is a cell site gateway (Cell Site Gateway, CSG), and an egress node of the data flow transmitted in the network is a radio service gateway (radio service gateway, RSG). The ingress node CSG and the egress node RSG separately perform in-band detection to obtain a link state routing protocol (link state routing protocol, LSP) entry, and report LSP entries determined by the ingress node CSG and the egress node RSG to a network control engine (network control engine, NCE). The LSP entry determined by the ingress node CSG records a quantity of packets of the data flow that enter the ingress. The LSP entry determined by the egress node RSG records a quantity of packets of the data flow that are sent from the egress. Based on the LSP entries reported by the ingress node CSG and the egress node RSG, the NCE determines whether a packet loss, a delay, or retransmission of the data flow exceeds a threshold. If the packet loss, the delay, or the retransmission exceeds the threshold, the NCE delivers an IFIT indication to a head node of each subnet, so that the head node adds an IFIT header to a packet. Each node may subsequently report information collected based on the IFIT header to the NCE, and the reported information is referred to as flow table data.

The in-band detection technology used to detect end-to-end service quality can detect faults of various types of data flows. For example, a data flow of a stream control transmission protocol (stream control transmission protocol, SCTP) type can be monitored to detect a fault on a signaling plane. Optionally, a data flow of a general packet radio service (general packet radio service, GPRS) tunneling protocol (tunneling protocol) type can be further monitored to detect a fault on a media plane. Optionally, a data flow of a user side interface (user-network interface, UNI) type can be further monitored to detect a connectivity fault.

A transmission path of a service data flow may be restored by using the in-situ flow detection technology that is based on hop-by-hop information that is collected by a node. The transmission path is also referred to as a service route. The control node can use a mass-fault clustering algorithm and hop-by-hop IFIT detection to locate a fault, so that the control node can provide a device-level big data analysis capability.

In addition, as communication technologies develop, different subnets are allowed in a network that carries a service. It should be noted that the subnet in embodiments of this application is a network in which several consecutive nodes that have a same type of tunnel and that are on a route are located. A tunnel in embodiments of this application includes a segment routing over internet protocol version 6 (internet protocol version 6, IPv6) (segment routing IPv6, SRv6) tunnel and an SR multiprotocol label switching (multiprotocol label switching, MPLS) tunnel. A scenario in which different subnets exist in the network that carries a service is referred to as an interworking (interworking) scenario.

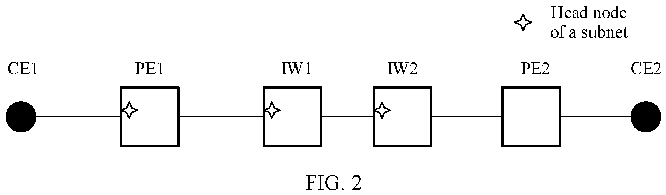

FIG. 2 shows a bearer network with an interworking scenario according to an embodiment of this application. As shown in FIG. 2, nodes such as a provider edge device (provider edge, PE) 1, an interworking device (interworking, IW) IW1, an IW2, and a PE2 are sequentially included in a route from a customer edge device (customer edge, CE) 1 to a CE2. The PE1 is an ingress node of a data flow, and the PE2 is an egress node of the data flow. An SRv6 tunnel is established between the PE1 and the IW1, an LDP or SR-MPLS tunnel is established between the IW 1 and the IW2, and an SRv6 tunnel is established between the IW2 and the PE2. Therefore, a network in which nodes (including the PE1 and the IW 1) between the PE1 and the IW1 are located is referred to as a subnet, a network in which nodes (including the IW1 and the IW2) between the IW 1 and the IW2 are located is referred to as a subnet, and a network in which nodes (including the IW2 and the PE2) between the IW2 and the PE2 are located is referred to as a subnet.

The IW1 and the IW2 are also devices such as routers. Because uplink and downlink tunnel types of the IW 1 and the IW2 are different, the two nodes are referred to as interworking (interworking) nodes and are referred to as IW nodes for short.

The in-situ flow detection method provided in embodiments of this application is applied to a scenario in which fault analysis is performed by using an IFIT technology in the bearer network with the interworking scenario. An objective is to provide a method for performing in-situ flow detection without using a subnet as a granularity, to improve flexibility and efficiency of the in-situ flow detection.

In addition, the in-situ flow detection method provided in embodiments of this application may not only be applied to the foregoing IFIT detection scenario, but also be applied to internet protocol flow performance measurement (internet protocol flow performance measurement, IPFPM) detection. A specific type of the in-situ flow detection is not limited in embodiments of this application.

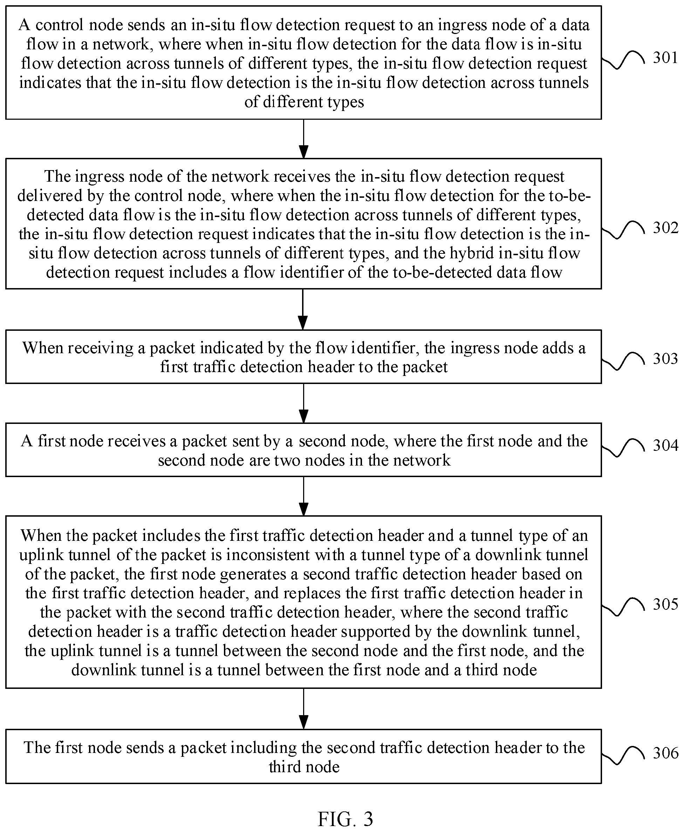

FIG. 3 is a flowchart of an in-situ flow detection method according to an embodiment of this application. As shown in FIG. 3, the method includes the following several steps.

Step 301: A control node sends an in-situ flow detection request to an ingress node of a data flow in a network. When in-situ flow detection for the data flow is in-situ flow detection across tunnels of different types, the in-situ flow detection request indicates that the in-situ flow detection is the in-situ flow detection across tunnels of different types.

The foregoing across tunnels of different types means that a tunnel type of an uplink tunnel of a node in a transmission path of a to-be-detected data flow is inconsistent with a tunnel type of a downlink tunnel of the node.

Correspondingly, when the in-situ flow detection for the data flow is in-situ flow detection for tunnels of a same type, the in-situ flow detection request indicates that the in-situ flow detection is the in-situ flow detection for tunnels of a same type. The tunnels of a same type mean that tunnel types of uplink and downlink tunnels of all nodes in a transmission path of a to-be-detected data flow are consistent.

In addition, when the in-situ flow detection for the data flow is the in-situ flow detection across tunnels of different types, the in-situ flow detection request delivered by the control node may also be referred to as a hybrid in-situ flow detection request. When the in-situ flow detection for the data flow is the in-situ flow detection for tunnels of a same type, the in-situ flow detection request delivered by the control node may also be referred to as a single in-situ flow detection request.

The in-situ flow detection request sent by the control node to the ingress node is also referred to as an in-situ flow detection (interworking-IFIT) instance. When the control node determines, based on in-band detection results of the ingress node and an egress node of the data flow, that a current service is faulty, the control node may perform the in-situ flow detection by using the embodiment shown in FIG. 3.

In a specific implementation, an implementation process in which the control node determines that the in-situ flow detection for the data flow is the in-situ flow detection across tunnels of different types is as follows: The control node obtains a tunnel type of a downlink tunnel of each node in the transmission path of the data flow, and when there are different tunnel types in the tunnel types of the downlink tunnels of the nodes, the in-situ flow detection for the data flow is determined to be the in-situ flow detection across tunnels of different types.

For example, all nodes in a network that carries a service are enabled with an in-band detection function, and each node reports an LSP entry to a control node. The LSP entry may also be referred to as an in-band detection result. The LSP entry reported by any node includes a flow identifier and next-hop information of a sent packet. The flow identifier may be represented by using a 5-tuple, and the 5-tuple includes a source address, a destination address, an identifier of an ingress node, an identifier of an egress node, and a packet protocol. When next-hop information that is corresponding to a flow identifier and that is reported by all nodes includes both an IPv6 next hop and an internet protocol version 4 (internet protocol version 4, IPv4) next hop, it indicates that tunnels of different types exist in a transmission path of a data flow indicated by the flow identifier. Therefore, a hybrid in-situ flow detection request is delivered when an in-band detection indicator exceeds a threshold. The in-band detection indicator includes the foregoing indicators such as the packet loss, the delay, or the retransmission.

According to the foregoing implementation, whether there are tunnels of different types in a transmission path of a data flow can be accurately determined based on next-hop information reported by each node in the transmission path of the data flow. However, in the foregoing implementation, each node needs to be enabled with the in-band detection. As a result, a large quantity of in-band detection resources are occupied.

In addition, a data flow whose transmission path includes tunnels of different types may be referred to as interworking (interworking) traffic. In addition, for any node, if a type of a tunnel from a previous hop of the node to the node is different from a type of a tunnel from the node to a next hop, the node is referred to as an interworking (interworking) node.

In the foregoing descriptions, whether there are tunnels of different types in the transmission path of the data flow is determined based on the in-band detection result of each node in the transmission path of the data flow. Optionally, in another specific implementation, only an ingress node and an egress node of the network are enabled with the in-band detection function. The control node obtains, based on in-band detection results reported by the ingress node and the egress node, an identifier of a virtual private network (virtual private network, VPN) in which the ingress node of the data flow is located and an identifier of a VPN in which the egress node is located. The control node performs a reverse query on an end-to-end service based on the identifier of the VPN in which the ingress node is located and the identifier of the VPN in which the egress node is located. The reverse query on the end-to-end service specifically refers to querying for related VPNs in a transmission path between the ingress node and the egress node, and determining whether VPNs of different tunnel types exist in the found VPNs. If VPNs of different tunnel types exist in the queried VPNs, traffic from the ingress node to the egress node is traffic of an interworking VPN (interworking-vpn) service. Therefore, it is determined that tunnels of different types exist in the transmission path of the traffic from the ingress node to the egress node. Subsequently, when an in-band flow indicator exceeds a threshold, a hybrid in-situ flow detection request is delivered.

In the foregoing implementation, only the ingress node and the egress node need to be enabled with the in-band detection function. Therefore, in-band detection resources can be saved. However, in the foregoing implementation, whether tunnels of different tunnel types exist in the transmission path between the ingress node and the egress node can be determined based only on a VPN dimension, and a data flow cannot be accurately determined. This may cause misidentification of non-interworking (interworking) traffic.

Step 302: The ingress node of the network receives the in-situ flow detection request delivered by the control node. When the in-situ flow detection for the to-be-detected data flow is the in-situ flow detection across tunnels of different types, the in-situ flow detection request indicates that the in-situ flow detection is the in-situ flow detection across tunnels of different types. The hybrid in-situ flow detection request includes a flow identifier of the to-be-detected data flow.

In this embodiment of this application, when determining that the in-situ flow detection needs to be performed on a data flow, the control node may deliver the in-situ flow detection request to an ingress node of the data flow in the network. To help the ingress node learn of the data flow on which the in-situ flow detection needs to be performed, the hybrid in-situ flow detection request includes a flow identifier of the to-be-detected data flow, so that the ingress node subsequently processes, based on the following step 303, the data flow indicated by the flow identifier.

Step 303: When receiving a packet indicated by the flow identifier, the ingress node adds a first traffic detection header to the packet.

Because the ingress node received the in-situ flow detection request delivered by the control node, when receiving the packet indicated by the flow identifier, the ingress node may add the first traffic detection header to the packet. The first traffic detection header indicates to perform the in-situ flow detection on the data flow.

A specific format of the first traffic detection header depends on a tunnel type of a tunnel from the ingress node to a next hop.

For example, when the in-situ flow detection is IFIT detection, the first traffic detection header may be referred to as a first IFIT header. The format of the first IFIT header depends on the tunnel type of the tunnel from the ingress node to the next hop.

For ease of subsequent description, formats of IFIT headers supported by different tunnel types are described herein.

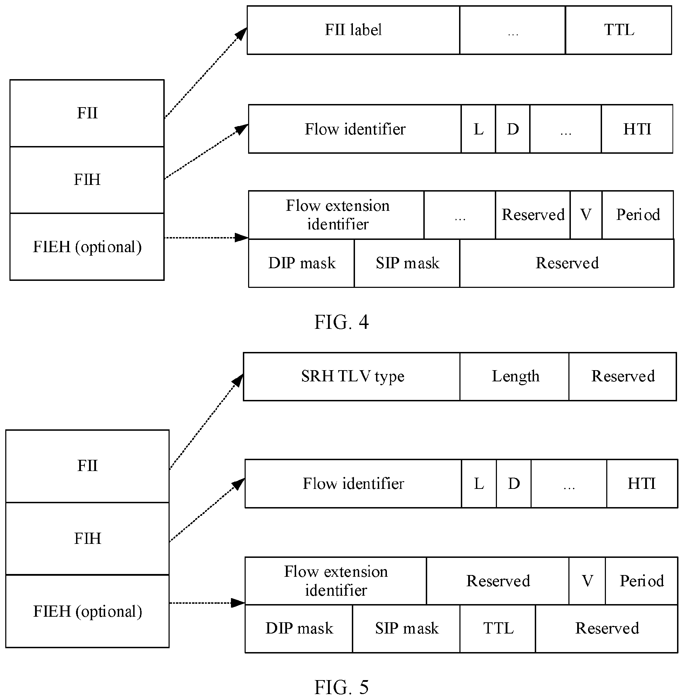

FIG. 4 is a schematic diagram of a format of an IFIT header supported by an MPLS tunnel according to an embodiment of this application. As shown in FIG. 4, the IFIT header includes three fields: a flow instruction indicator (flow instruction indicator, FII) field, a flow instruction header (flow instruction extension header, FIH) field, and an optional flow instruction extension header (flow instruction extension header, FIEH) field.

The FII field indicates that IFIT detection currently needs to be performed on a flow. The FIH field includes the following fields. A flow ID is a 20-bit field and used to record a flow identifier. An L flag (Flag) is a packet loss coloring flag. If this field is set, a current in-situ flow detection is packet loss detection. AD flag (Flag) is a delay coloring flag. If this field is set, a current in-situ flow detection is delay detection. A header type indicator (Header Type Indicator, HTI) is an 8-bit field and used to indicate a type of a tunnel on which in-situ flow detection is currently performed. The type of the tunnel on which the in-situ flow detection is performed includes basic E2E detection, basic hop-by-hop detection, extended E2E detection, extended hop-by-hop detection, and the like.

The FIEH includes the following fields. A flow identifier extension (Flow ID Ext) is used to extend a bit width. A length of this field is 20 bits, and this field and the flow identifier field in the FIH together record a flow identifier. A V flag (Flag) is a flag for enabling reverse flow learning. A period is a detection period. A length of this field is 3 bits. For example, 0 is a reserved value of this field. When the value of this field is 1, the detection period is 1s (second). When the value of this field is 2, the detection period is 10s. When the value of this field is 2, the detection period is 30s. When the value of this field is 4, the detection period is 60s. When the value of this field is 5, the detection period is 300s. A destination IP (destination IP, DIP) mask (Mask) field is used to record a DIP mask for reverse flow learning. A source IP (source IP, SIP) mask (Mask) field is used to record an SIP mask for reverse flow learning.

FIG. 5 is a schematic diagram of a format of an IFIT header supported by an SRv6 tunnel according to an embodiment of this application. As shown in FIG. 5, fields included in the IFIT header are consistent with those included in the IFIT header shown in FIG. 4. But locations of the fields are different. Therefore, meanings of the fields in the IFIT header shown in FIG. 5 are not explained herein.

It can be learned from FIG. 4 and FIG. 5 that formats of IFIT headers supported by different types of tunnels are different. However, content included in the IFIT headers supported by the different types of tunnels is the same. Therefore, in embodiments of this application, if there are tunnels of different types in the network that carries the service, an IFIT instance needs to be delivered only to the ingress node, and a subsequent node may convert an IFIT header by using the following steps.

It can be learned from the foregoing content that, in step 303, the ingress node may determine the specific format of the first traffic detection header based on the tunnel type of the tunnel from the ingress node to the next hop, and then generate the first traffic detection header based on the determined traffic detection header format.

After adding the first traffic detection header to the packet, the ingress node may send, to the next hop, the packet to which the first traffic detection header is added. Subsequently, a first node and a second node are used as an example to describe how the subsequent node of the ingress node processes the packet.

In addition, in a specific implementation, if the control node delivers the hybrid in-situ flow detection request, to help the subsequent node identify that the current in-situ flow detection is hybrid in-situ flow detection, a first flag field is extended in the packet, and a value of the first flag field indicates whether the in-situ flow detection is the in-situ flow detection across tunnels of different types. In other words, if the in-situ flow detection request indicates that the in-situ flow detection is the in-situ flow detection across tunnels of different types, a packet obtained through processing by the ingress node includes the first flag field.

For example, when the value of the first flag field is 1, it indicates that the in-situ flow detection is the in-situ flow detection across tunnels of different types. When the value of the first flag field is 0, it indicates that the in-situ flow detection is not the in-situ flow detection across tunnels of different types.

In a specific implementation, the first flag field may be added to the traffic detection header through extension. Optionally, the first flag field may be further extended at another location of the packet. A specific location of the first flag field is not limited in this embodiment of this application.

For example, when the first traffic detection header indicates that the in-situ flow detection is the in-situ flow information telemetry IFIT detection, the first flag field is a field in an FIEH included in the first traffic detection header. That is, the first flag field may be extended in the FIEH in the IFIT header. Optionally, when the first traffic detection header indicates that the in-situ flow detection is IPFPM detection, the first flag field may be extended in the packet based on a requirement. A specific location of the first flag field in the IPFPM detection is not limited in this embodiment of this application.

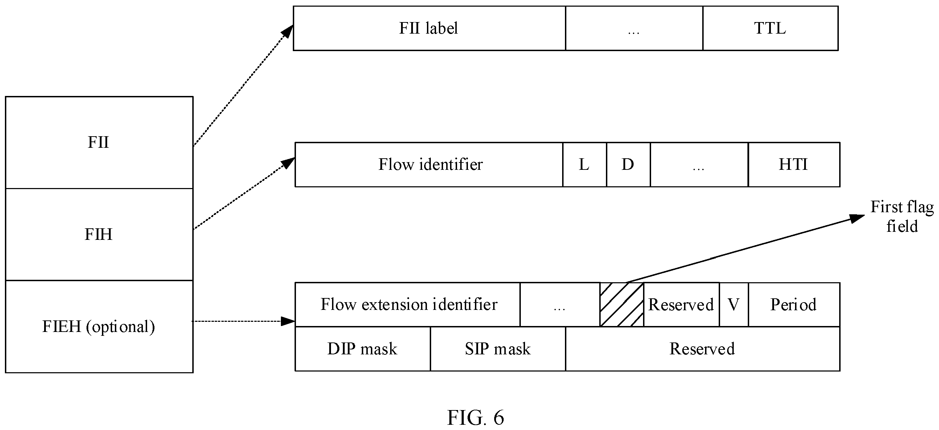

The following describes in detail how to extend the first flag field by using an example in which the traffic detection header is the IFIT header. For extension manners of other traffic detection headers, refer to an extension manner of the IFIT header. FIG. 6 is a schematic diagram of a format of an extended IFIT header according to an embodiment of this application. As shown in FIG. 6, a part of a reserved field in an FIEH field in an IFIT header is extended to be the first flag field. It should be noted that FIG. 6 is described by using the format of the IFIT header shown in FIG. 4 as an example. For the IFIT header shown in FIG. 5, because a same location in the FIEH field also includes a reserved field, the first flag field may be added through extension based on the reserved field.

In addition, the first flag field may be marked as a sticky flag field.

Step 304: The first node receives a packet sent by the second node, where the first node and the second node are two nodes in the network.

The second node may be the ingress node, or may be any node after the ingress node.

When receiving the packet sent by the second node, the first node first determines whether the packet includes the first traffic detection header. If the packet includes the first traffic detection header, it indicates that the packet is a packet used for the in-situ flow detection. Therefore, whether a tunnel type of an uplink tunnel of the packet is consistent with a tunnel type of a downlink tunnel of the packet may continue to be determined, to process the packet by using the following step 304. Correspondingly, if the packet does not include a traffic detection header, the packet is forwarded to a next hop.

In addition, for any node, the node includes an uplink data management chip, a microcode chip, and a downlink data management chip. The microcode chip is configured to process a packet received by the uplink data management chip, and then send the processed packet to the downlink data management chip, to forward the packet. The uplink data management chip, the microcode chip, and the downlink management chip may be three chips independent of each other, or may be three modules on one chip. This is not specifically limited in this embodiment of this application.

Therefore, in a specific implementation, to facilitate the microcode chip to quickly process the packet subsequently, when determining that the packet includes the traffic detection header, the uplink management chip may add an internal forwarding header to the packet. The internal forwarding header includes a second flag field, and a value of the second flag field indicates whether the packet includes the traffic detection header. Therefore, subsequently, the microcode chip or the downlink management chip quickly determines, based on the second flag field, whether the packet includes the first traffic detection header. The second flag field may be marked as an ifitable field. For example, when the value of the second flag field is 1, it indicates that the packet includes the traffic detection header; or when the value of the second flag field is 0, it indicates that the packet does not include the traffic detection header.

In addition, in a specific implementation, when the value of the second flag field indicates that the packet includes the first traffic detection header, the internal forwarding header may further include a third flag field, and a value of the third flag field indicates the tunnel type of the uplink tunnel, so that subsequently, the microcode chip or the downlink management chip quickly determines, based on the third flag field, whether uplink and downlink tunnel types of the packet are consistent.

Optionally, when the first traffic detection header includes the first flag field, if the value of the first flag field indicates that the in-situ flow detection is the in-situ flow detection across tunnels of different types, the third flag field is added to the internal forwarding header. If the value of the first flag field indicates that the in-situ flow detection is not the in-situ flow detection across tunnels of different types, the third flag field does not need to be added to the internal forwarding header. The third flag field may be marked as an ingresstnltype field.

It can be learned that, in this embodiment of this application, when the first flag field is not extended to the first traffic detection header, to implement the in-situ flow detection method provided in this embodiment of this application, the third flag field can be directly added to the internal forwarding header. When the first flag field is extended to the first traffic detection header, whether the third flag field needs to be added to the internal forwarding header may be determined based on the value of the first flag field.

In addition, the second flag field and the third flag field may exist at the same time, or either of them may exist. This is not specifically limited in this embodiment of this application.

Step 305: When the packet includes the first traffic detection header and the tunnel type of the uplink tunnel of the packet is inconsistent with the tunnel type of the downlink tunnel of the packet, the first node generates a second traffic detection header based on the first traffic detection header, and replaces the first traffic detection header in the packet with the second traffic detection header. The second traffic detection header is a traffic detection header supported by the downlink tunnel, the uplink tunnel is a tunnel between the second node and the first node, and the downlink tunnel is a tunnel between the first node and a third node.

It can be learned from step 304 that, after being processed by the uplink management chip, the packet is sent by the microcode chip to the downlink data management chip. Therefore, when forwarding the packet, the microcode chip performs the following determining on the packet: determining whether the packet includes the traffic detection header and whether the tunnel type of the uplink tunnel of the packet is consistent with the tunnel type of the downlink tunnel of the packet. If the packet does not include the traffic detection header, the packet is directly forwarded. If the packet includes the traffic detection header, it continues to be determined whether the tunnel type of the uplink tunnel of the packet is consistent with the tunnel type of the downlink tunnel of the packet. If the tunnel type of the uplink tunnel of the packet is consistent with the tunnel type of the downlink tunnel of the packet, the packet is sent without changing the format of the traffic detection header. If the tunnel type of the uplink tunnel of the packet is inconsistent with the tunnel type of the downlink tunnel of the packet, the format of the first traffic detection header in the packet needs to be changed based on step 305.

In a specific implementation, an implementation process in which the first node generates the second traffic detection header based on the first traffic detection header is: determining a difference between a value of a time to live TTL field in the first traffic detection header and a reference value as a value of a TTL field in the second traffic detection header, and copying a value of another flag field that is in the first traffic detection header and that is the same as a flag field in the second traffic detection header to the second traffic detection header.

For example, when the in-situ flow detection is the IFIT detection, if the packet includes the first IFIT header, and the tunnel type of the uplink tunnel of the packet is inconsistent with the tunnel type of the downlink tunnel of the packet, flag bits such as flowid, ttl, L, D, and R in the first IFIT header are copied to corresponding locations in a second IFIT header, and 1 is subtracted from a value of the TTL field. For another example, if the packet includes the first IFIT header, and the tunnel type of the uplink tunnel of the packet is consistent with the tunnel type of the downlink tunnel of the packet, the format of the IFIT header does not need to be changed, and only 1 needs to be subtracted from the value of the TTL.

In the foregoing part, the value of the TTL field in the second traffic detection header is determined based on the value of the TTL field in the first traffic detection header. In this way, even if across subnets, when detection is performed on a same data flow, time to live of traffic detection headers in packets sent by nodes is continuous. In this way, another node such as the control node can quickly determine, based on the TLL value, the next hop of the first node.

In addition, when the packet includes the first flag field, and the value of the first flag field indicates that the in-situ flow detection is the in-situ flow detection across tunnels of different types, whether the tunnel type of the uplink tunnel of the packet is consistent with the tunnel type of the downlink tunnel of the packet is determined. When the uplink and downlink tunnel types are inconsistent, a manner of generating the second traffic detection header based on the first traffic detection header is implemented. When the value of the first flag field indicates that the in-situ flow detection is in-situ flow detection for tunnels of a same type, the operation of the determining whether the tunnel type of the uplink tunnel of the packet is consistent with the tunnel type of the downlink tunnel of the packet does not need to be performed. The first node updates the value of the time to live TTL field in the first traffic detection header, and sends a packet including the updated first traffic detection header to the third node. In other words, in this scenario, there is no need to perform the step of generating the second traffic detection header based on the first traffic detection header, and the first node is used as a head node of a subnet to add the traffic detection header by using a conventional technology.

In the foregoing scenario, the generated second traffic detection header may include the first flag field, and a value of the first flag field is the same as the value of the first flag field in the first traffic detection header. In this way, the subsequent node may continue to determine, based on the first flag field, that the hybrid in-situ flow detection is performed on the current node. Optionally, if the first node can determine that tunnel types between all subsequent nodes are consistent, the value of the first flag field in the generated second traffic detection header may be set to a value different from that in the first traffic detection header. Optionally, if the first node can determine that a next hop of the next hop of the first node needs to perform the in-situ flow detection, the generated second traffic detection header may alternatively not include the first flag field.

In addition, when the second flag field is added to the internal forwarding header of the packet, the microcode chip determines, based on the value of the second flag field, whether the packet includes the traffic detection header. Therefore, when the packet includes the first traffic detection header, and the tunnel type of the uplink tunnel of the packet is inconsistent with the tunnel type of the downlink tunnel of the packet, an implementation process in which the first node generates the second traffic detection header based on the first traffic detection header may be as follows: When detecting that the value of the second flag field indicates that the packet includes the traffic detection header, and the tunnel type of the uplink tunnel of the packet is inconsistent with the tunnel type of the downlink tunnel of the packet, the microcode chip generates the second traffic detection header based on the first traffic detection header.

In addition, when the third flag field is added to the internal forwarding header, the microcode chip determines, by using the value of the third flag field, whether the tunnel type of the uplink tunnel of the packet is consistent with the tunnel type of the downlink tunnel of the packet. Therefore, when the packet includes the first traffic detection header, and the tunnel type of the uplink tunnel of the packet is inconsistent with the tunnel type of the downlink tunnel of the packet, an implementation process in which the first node generates the second traffic detection header based on the first traffic detection header is as follows: When the packet includes the first traffic detection header and the value of the third flag field indicates that the tunnel type of the uplink tunnel is inconsistent with the tunnel type of the downlink tunnel, the microcode chip generates the second traffic detection header based on the first traffic detection header.

It should be noted that the foregoing descriptions are provided by using an example in which the microcode chip determines whether the packet includes the first traffic detection header and whether the uplink and downlink tunnel types of the packet are consistent. Optionally, the downlink management chip may determine whether the packet includes the first traffic detection header and whether the uplink and downlink tunnel types of the packet are consistent. This is not specifically limited in this embodiment of this application.

Step 306: The first node sends a packet including the second traffic detection header to the third node.

After replacing the format of the traffic detection header in the packet, the first node may send the packet including the second traffic detection header to the third node.

In addition, when the packet includes the first traffic detection header and the tunnel type of the uplink tunnel of the packet is inconsistent with the tunnel type of the downlink tunnel of the packet, the first node further determines a link state packet based on the first traffic detection header. The link state packet includes a fourth flag field, and a value of the fourth flag field indicates that a tunnel type of an uplink tunnel of the first node is inconsistent with a tunnel type of a downlink tunnel of the first node. The link state packet is sent to the control node. The link state packet further includes information collected based on a field in the first traffic detection header. In this way, the control node may determine, based on the fourth flag field, that the first node is an interworking (interworking) node, so that the control node may subsequently mark the feature of the first node in a network topology, so that a management person can quickly learn of the feature of the first node.

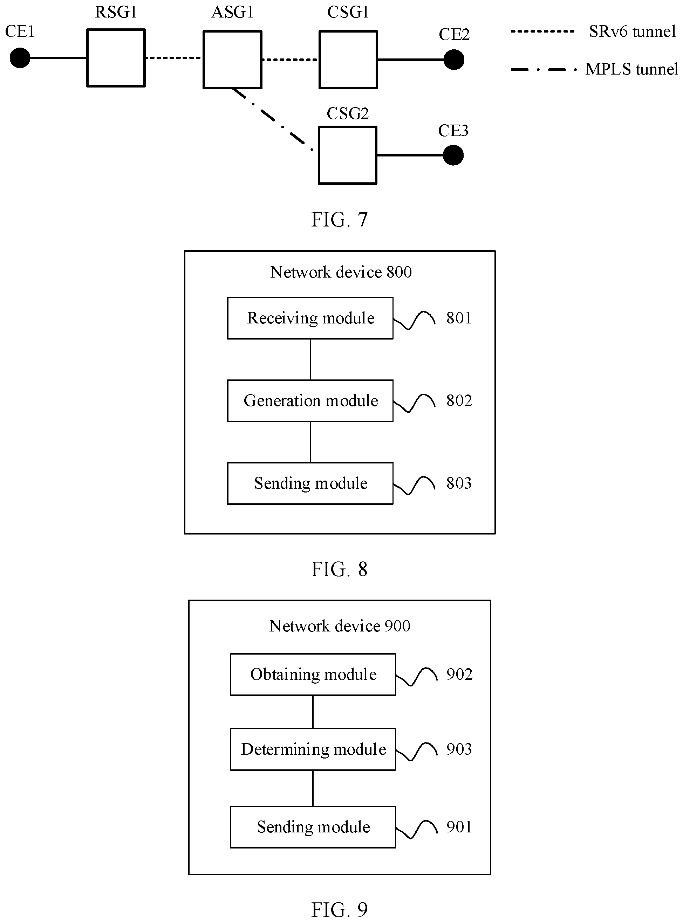

The following further describes this embodiment of this application by using a hierarchical VPN (Hierarchical VPN, HVPN) network architecture shown in FIG. 7 as an example. In the network architecture shown in FIG. 7, an example in which a traffic detection header is an IFIT header is used for description.

As shown in FIG. 7, in the HVPN, a tunnel from an RSG1 to an access service gateway (access service gateway, ASG) 1 is an SRv6 tunnel, and a tunnel from the ASG1 to a CSG1 is also an SRv6 tunnel. However, because a CSG2 is an old device or a device of a new version of an old solution, a tunnel from the ASG1 to the CSG2 is an MPLS tunnel. Therefore, for a service between a CE1 and a CE3, the ASG1 node is an interworking node.

1. For a service between the CE1 and a CE2, next hop information reported by each device by using an in-band detection technology is an IPv6 address, and no hybrid in-situ flow detection request needs to be delivered. During an in-situ flow detection process, the ASG1 node determines that uplink and downlink tunnel types are the same and may not remove an IFIT header.

2. For the service between the CE1 and the CE3, next hop information reported by an in-band flow in the RSG1 node is an IPv6 address, but next hop information reported in the ASG1 node is an IPv4 address of the CSG2. In this case, a controller can determine that the service is an interworking service. If the CSG2 also supports IFIT detection, the controller delivers a hybrid in-situ flow detection request for end-to-end detection. During an in-situ flow detection process, the ASG1 node inherits an IFIT header, in other words, may convert a format of the IFIT header. If the CSG2 does not support IFIT detection, an in-situ flow detection request of only a single segment may be delivered, to perform in-situ flow detection only on a network segment between the RSG1 and the ASG1.

In conclusion, in this embodiment of this application, when the tunnel type of the uplink tunnel of the first node is inconsistent with the tunnel type of the downlink tunnel of the first node, the first node can generate the second traffic detection header based on the first traffic detection header. Therefore, when the in-situ flow detection is the IFIT detection, the first node can continue to send, to the next hop without using an IFIT indication delivered by the control node, a packet that carries a traffic detection header, so that the in-situ flow detection across tunnels of different types is implemented. In this way, when the in-situ flow detection needs to be performed on a data flow of a service, the control node does not need to deliver the IFIT indication to a head node of each subnet. It can be learned that in this embodiment of this application, the in-situ flow detection can be performed at a granularity of an entire service, and does not need to be performed at a granularity of a subnet, so that flexibility and efficiency of the in-situ flow detection are improved.

FIG. 8 is a schematic diagram of a structure of a network device according to an embodiment of this application. The network device is applied to a network system. The network system includes a control node, a first node, a second node, and a third node. The first node, the second node, and the third node are three nodes in a transmission path of a to-be-detected data flow, and the network device is the first node. For example, the network device may be the first node in the embodiment shown in FIG. 3, or a head node of a subnet in the embodiment shown in FIG. 2, for example, the PE1, the IW1, and the IW2. As shown in FIG. 8, the network device 800 includes a receiving module 801, a generation module 802, and a sending module 803.

The receiving module 801 is configured to receive a packet sent by the second node. The first node and the second node are two nodes in a network. For a specific implementation, refer to descriptions of step 304 in the embodiment shown in FIG. 3. Details are not described herein again.

The generation module 802 is configured to: when the packet includes a first traffic detection header and a tunnel type of an uplink tunnel of the packet is inconsistent with a tunnel type of a downlink tunnel of the packet, generate, by the first node, a second traffic detection header based on the first traffic detection header, and replace the first traffic detection header in the packet with the second traffic detection header. The second traffic detection header is a traffic detection header supported by the downlink tunnel, the uplink tunnel is a tunnel between the second node and the first node, and the downlink tunnel is a tunnel between the first node and the third node. For a specific implementation, refer to descriptions of step 305 in the embodiment shown in FIG. 3. Details are not described herein again.

The sending module 803 is configured to send a packet including the second traffic detection header to the third node. For a specific implementation, refer to descriptions of step 306 in the embodiment shown in FIG. 3. Details are not described herein again.

Optionally, the network device further includes a judging module, configured to:
after the packet sent by the second node is received, determine whether the packet includes the first traffic detection header; and
when the packet includes the first traffic detection header, determine whether the tunnel type of the uplink tunnel of the packet is consistent with the tunnel type of the downlink tunnel of the packet.

Optionally, the packet includes a first flag field, and a value of the first flag field indicates whether in-situ flow detection is in-situ flow detection across tunnels of different types.

The network device further includes the judging module. The judging module is configured to perform an operation of determining whether the tunnel type of the uplink tunnel of the packet is consistent with the tunnel type of the downlink tunnel of the packet when the value of the first flag field indicates that the in-situ flow detection is the in-situ flow detection across tunnels of different types.

Optionally, the judging module is further configured to skip performing the operation of determining whether the tunnel type of the uplink tunnel of the packet is consistent with the tunnel type of the downlink tunnel of the packet when the value of the first flag field indicates that the in-situ flow detection is in-situ flow detection for tunnels of a same type. The first node updates a value of a time to live TTL field in the first traffic detection header.

The sending module is further configured to send a packet including the updated first traffic detection header to the third node.

Optionally, after the network device receives the packet sent by the second node, the network device further includes an addition module.

The addition module is configured to add an internal forwarding header to the packet, where the internal forwarding header includes a second flag field, and a value of the second flag field indicates whether the packet includes a traffic detection header.

The judging module is configured to:
determine, based on the value of the second flag field, whether the packet includes the first traffic detection header.

Optionally, when the value of the second flag field indicates that the packet includes the first traffic detection header, the internal forwarding header further includes a third flag field, and a value of the third flag field indicates the tunnel type of the uplink tunnel.

The judging module is configured to:
determine, based on the value of the third flag field, whether the tunnel type of the uplink tunnel of the packet is consistent with the tunnel type of the downlink tunnel of the packet.

Optionally, the network device further includes a determining module.

The determining module is configured to: when the packet includes the first traffic detection header and the tunnel type of the uplink tunnel of the packet is inconsistent with the tunnel type of the downlink tunnel of the packet, determine a link state packet based on the first traffic detection header. The link state packet includes a fourth flag field, and a value of the fourth flag field indicates that an uplink tunnel type of the first node and a downlink tunnel type of the first node are inconsistent.

The sending module is further configured to send the link state packet to the control node.

Optionally, the generation module is configured to:
determine a difference between a value of a time to live TTL field in the first traffic detection header and a reference value as a value of a TTL field in the second traffic detection header; and
copy a value of another field that is in the first traffic detection header and that is the same as a field in the second traffic detection header to the second traffic detection header.

Optionally, the network device further includes an updating module.

The updating module is configured to: after whether the tunnel type of the uplink tunnel of the packet is consistent with the tunnel type of the downlink tunnel of the packet is determined, update, by the first node, a value of a time to live TTL field in the first traffic detection header when the packet includes the first traffic detection header and the tunnel type of the uplink tunnel of the packet is consistent with the tunnel type of the downlink tunnel of the packet.

The sending module is further configured to send a packet including the updated first traffic detection header to the third node.

Optionally, the first traffic detection header indicates to perform IFIT detection or internet protocol flow performance measurement IPFPM detection on the to-be-detected data flow.

Optionally, the first flag field is a field in the first traffic detection header.

Optionally, when the first traffic detection header indicates that the in-situ flow detection is in-situ flow information telemetry IFIT detection, the first flag field is a field in a flow instruction extension header FIEH included in the first traffic detection header.

Optionally, the tunnel type includes a multiprotocol label switching MPLS tunnel and a segment routing over internet protocol version 6 SRv6 tunnel.

In conclusion, in this embodiment of this application, when the tunnel type of the uplink tunnel of the first node is inconsistent with the tunnel type of the downlink tunnel of the first node, the first node can generate the second traffic detection header based on the first traffic detection header. Therefore, when the in-situ flow detection is the IFIT detection, the first node can continue to send, to a next hop without using an IFIT indication delivered by the control node, a packet that carries a traffic detection header, so that the in-situ flow detection across tunnels of different types is implemented. In this way, when the in-situ flow detection needs to be performed on a data flow of a service, the control node does not need to deliver the IFIT indication to a head node of each subnet. It can be learned that in this embodiment of this application, the in-situ flow detection can be performed at a granularity of an entire service, and does not need to be performed at a granularity of a subnet, so that flexibility and efficiency of the in-situ flow detection are improved.

It should be noted that when the network device provided in the foregoing embodiment forwards a packet, division of the foregoing functional modules is taken as an example for illustration. In actual application, the foregoing functions can be allocated to different functional modules for implementation based on a requirement. That is, an inner structure of a device is divided into different functional modules to implement all or a part of the functions described above. In addition, the network device provided in the foregoing embodiment pertains to a same concept as the in-situ flow detection method embodiment. For a specific implementation process, refer to the method embodiment. Details are not described herein again.

FIG. 9 is a schematic diagram of a structure of a network device according to an embodiment of this application. The network device is applied to a network system. The network system includes a control node, a first node, a second node, and a third node. The first node, the second node, and the third node are three nodes in a transmission path of a to-be-detected data flow. The network device is the control node. For example, the network device may be the control node in the embodiment shown in FIG. 3. As shown in FIG. 9, the network device 900 includes a sending module 901.

The sending module 901 is configured to send an in-situ flow detection request to an ingress node of the data flow in the network. When in-situ flow detection for the data flow is in-situ flow detection across tunnels of different types, the in-situ flow detection request indicates that the in-situ flow detection is the in-situ flow detection across tunnels of different types. The being across tunnels of different types means that a tunnel type of an uplink tunnel of a node in the transmission path of the to-be-detected data flow is inconsistent with a tunnel type of a downlink tunnel of the node. For a specific implementation, refer to descriptions of step 301 in the embodiment shown in FIG. 3. Details are not described herein again.

Optionally, when the in-situ flow detection for the data flow is in-situ flow detection for tunnels of a same type, the in-situ flow detection request indicates that the in-situ flow detection is the in-situ flow detection for tunnels of a same type. For a specific implementation, refer to descriptions of step 301 in the embodiment shown in FIG. 3. Details are not described herein again.

Optionally, the network device further includes an obtaining module 902 and a determining module 903.

The obtaining module 902 is configured to obtain a tunnel type of a downlink tunnel of each node in the transmission path of the data flow. For a specific implementation, refer to descriptions of step 301 in the embodiment shown in FIG. 3. Details are not described herein again.

The determining module 903 is further configured to: when there are different tunnel types in the tunnel types of the downlink tunnels of the nodes, determine that the in-situ flow detection for the data flow is the in-situ flow detection across tunnels of different types. For a specific implementation, refer to descriptions of step 301 in the embodiment shown in FIG. 3. Details are not described herein again.

Optionally, the in-situ flow detection includes in-situ flow information telemetry IFIT detection or internet protocol flow performance measurement IPFPM detection.

Optionally, the tunnel type includes a multiprotocol label switching MPLS tunnel and a segment routing over internet protocol version 6 SRv6 tunnel.

In conclusion, in this embodiment of this application, when a tunnel type of an uplink tunnel of the first node is inconsistent with a tunnel type of a downlink tunnel of the first node, the first node can generate a second traffic detection header based on a first traffic detection header. Therefore, when the in-situ flow detection is the IFIT detection, the first node can continue to send, to a next hop without using an IFIT indication delivered by the control node, a packet that carries a traffic detection header, so that the in-situ flow detection across tunnels of different types is implemented. In this way, when the in-situ flow detection needs to be performed on a data flow of a service, the control node does not need to deliver the IFIT indication to a head node of each subnet. It can be learned that in this embodiment of this application, the in-situ flow detection can be performed at a granularity of an entire service, and does not need to be performed at a granularity of a subnet, so that flexibility and efficiency of the in-situ flow detection are improved.

It should be noted that when the network device provided in the foregoing embodiment performs the in-situ flow detection, division of the foregoing functional modules is taken as an example for illustration. In actual application, the foregoing functions can be allocated to different functional modules for implementation based on a requirement. That is, an inner structure of a device is divided into different functional modules to implement all or a part of the functions described above. In addition, the network device provided in the foregoing embodiment pertains to a same concept as the in-situ flow detection method embodiment. For a specific implementation process, refer to the method embodiment. Details are not described herein again.

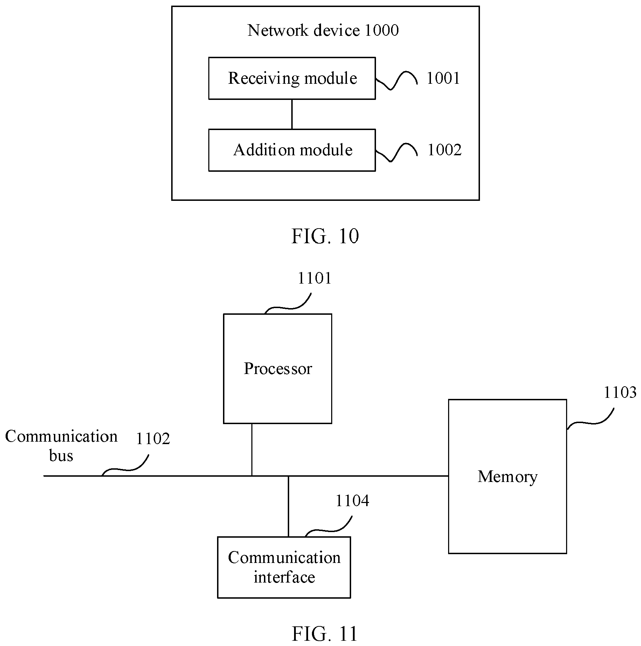

FIG. 10 is a schematic diagram of a structure of a network device according to an embodiment of this application. The network device is applied to a network system. The network system includes a control node, a first node, a second node, and a third node, where the first node, the second node, and the third node are three nodes in a transmission path of a to-be-detected data flow. The network device is an ingress node of the data flow in the network system. The first node, the second node, and the third node are three nodes in the transmission path of the data flow. For example, the network device may be the ingress node in the embodiment of FIG. 3. As shown in FIG. 10, the network device 1000 includes a receiving module 1001 and an addition module 1002.

The receiving module 1001 is configured to receive an in-situ flow detection request delivered by the control node. When in-situ flow detection for the to-be-detected data flow is in-situ flow detection across tunnels of different types, the in-situ flow detection request indicates that the in-situ flow detection is the in-situ flow detection across tunnels of different types. The being across tunnels of different types means that a tunnel type of an uplink tunnel of a node in the transmission path of the to-be-detected data flow is inconsistent with a tunnel type of a downlink tunnel of the node, and the hybrid in-situ flow detection request includes a flow identifier of the to-be-detected data flow. For a specific implementation, refer to descriptions of step 302 in the embodiment shown in FIG. 3. Details are not described herein again.

The addition module 1002 is configured to: when a packet indicated by the flow identifier is received, add a first traffic detection header to the packet. For a specific implementation, refer to descriptions of step 303 in the embodiment shown in FIG. 3. Details are not described herein again.

Optionally, if the in-situ flow detection request indicates that the in-situ flow detection is the in-situ flow detection across tunnels of different types, a packet obtained through processing by the ingress node includes a first flag field, and a value of the first flag field indicates that the in-situ flow detection is the in-situ flow detection across tunnels of different types. For a specific implementation, refer to descriptions of step 303 in the embodiment shown in FIG. 3. Details are not described herein again.

Optionally, if the in-situ flow detection request indicates that the in-situ flow detection is in-situ flow detection for tunnels of a same type, the value of the first flag field added to the packet indicates that the in-situ flow detection is the in-situ flow detection for tunnels of a same type. For a specific implementation, refer to descriptions of step 303 in the embodiment shown in FIG. 3. Details are not described herein again.

Optionally, the first traffic detection header indicates to perform IFIT detection or internet protocol flow performance measurement IPFPM detection on the to-be-detected data flow.

Optionally, the first flag field is a field in the first traffic detection header.

Optionally, when the first traffic detection header indicates that the in-situ flow detection is in-situ flow information telemetry IFIT detection, the first flag field is a field in a flow instruction extension header FIEH included in the first traffic detection header.

Optionally, the tunnel type includes a multiprotocol label switching MPLS tunnel and a segment routing over internet protocol version 6 SRv6 tunnel.

In conclusion, in this embodiment of this application, when a tunnel type of an uplink tunnel of the first node is inconsistent with a tunnel type of a downlink tunnel of the first node, the first node can generate a second traffic detection header based on the first traffic detection header. Therefore, when the in-situ flow detection is the IFIT detection, the first node can continue to send, to a next hop without using an IFIT indication delivered by the control node, a packet that carries a traffic detection header, so that the in-situ flow detection across tunnels of different types is implemented. In this way, when the in-situ flow detection needs to be performed on a data flow of a service, the control node does not need to deliver the IFIT indication to a head node of each subnet. It can be learned that in this embodiment of this application, the in-situ flow detection can be performed at a granularity of an entire service, and does not need to be performed at a granularity of a subnet, so that flexibility and efficiency of the in-situ flow detection are improved.

It should be noted that when the network device provided in the foregoing embodiment performs the in-situ flow detection, division of the foregoing functional modules is taken as an example for illustration. In actual application, the foregoing functions can be allocated to different functional modules for implementation based on a requirement. That is, an inner structure of a device is divided into different functional modules to implement all or a part of the functions described above. In addition, the network device provided in the foregoing embodiment pertains to a same concept as the in-situ flow detection method embodiment. For a specific implementation process, refer to the method embodiment. Details are not described herein again.

FIG. 11 is a schematic diagram of a structure of a network device according to an embodiment of this application. Nodes such as the ingress node, the first node, the second node, the third node, and the control node in the network in embodiments of this application can be implemented by using the network device shown in FIG. 11. With reference to FIG. 11, the network device includes at least one processor 1101, a communication bus 1102, a memory 1103, and at least one communication interface 1104.

The processor 1101 may be a general-purpose central processing unit (central processing unit, CPU), an application-specific integrated circuit (application-specific integrated circuit, ASIC), or one or more integrated circuits configured to control program execution of the solutions in this application.

For example, when the network device is the control node in the embodiment of FIG. 3, the processor 1101 is configured to determine an in-situ flow detection request that needs to be sent to an ingress node of a to-be-detected data flow in a network. When in-situ flow detection for the data flow is in-situ flow detection across tunnels of different types, the in-situ flow detection request indicates that the in-situ flow detection is the in-situ flow detection across tunnels of different types. The being across tunnels of different types means that a tunnel type of an uplink tunnel of a node in a transmission path of the to-be-detected data flow is inconsistent with a tunnel type of a downlink tunnel of the node. For a specific implementation, refer to descriptions of step 301 in the embodiment of FIG. 3. Details are not described herein again.

For another example, when the network device is the ingress node of the data flow in the embodiment of FIG. 3, the processor 1101 is configured to add a first traffic detection header to a packet based on an in-situ flow detection request delivered by a control node, where the first traffic detection header indicates to perform in-situ flow detection on a data flow indicated by a flow identifier. When the in-situ flow detection for the to-be-detected data flow is in-situ flow detection across tunnels of different types, the in-situ flow detection request indicates that the in-situ flow detection is the in-situ flow detection across tunnels of different types. The being across tunnels of different types means that a tunnel type of an uplink tunnel of a node in a transmission path of the to-be-detected data flow is inconsistent with a tunnel type of a downlink tunnel of the node. The in-situ flow detection request includes the flow identifier of the to-be-detected data flow For a specific implementation, refer to descriptions of step 303 in the embodiment of FIG. 3. Details are not described herein again.

For another example, when the network device is the first node in the transmission path of the data flow in the embodiment of FIG. 3, the processor 1101 is configured to: when a packet includes a first traffic detection header and a tunnel type of an uplink tunnel of the packet is inconsistent with a tunnel type of a downlink tunnel of the packet, generate a second traffic detection header based on the first traffic detection header, and replace the first traffic detection header in the packet with the second traffic detection header. The second traffic detection header is a traffic detection header supported by the downlink tunnel, the uplink tunnel is a tunnel between a second node and the first node, and the downlink tunnel is a tunnel between the first node and a third node. For a specific implementation, refer to descriptions of step 305 in the embodiment of FIG. 3. Details are not described herein again.

The communication bus 1102 may include a channel, to transfer information between the foregoing components.

The memory 1103 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk or another magnetic storage device, or any other medium that can be used to carry or store expected program code in a form of instructions or a data structure and that can be accessed by a computer. However, the memory 1103 is not limited thereto. The memory 1103 may exist independently, and is connected to the processor 1101 by using the communication bus 1102. Alternatively, the memory 1103 may be integrated with the processor 1101.

The memory 1103 is configured to store program code used for executing the solutions of this application, and the processor 1101 controls the execution. The processor 1101 is configured to execute the program code stored in the memory 1103. The program code may include one or more software modules. The software module is a module included in any node in FIG. 8 to FIG. 10.

The communication interface 1104 uses any transceiver-type apparatus, and is configured to communicate with another device or a communication network such as the Ethernet, a radio access network (radio access network, RAN), or a wireless local area network (wireless local area network, WLAN). In embodiments of this application, receiving and sending functions of nodes such as the ingress node, the first node, the second node, the third node, and the control node in the network are all implemented by using the communication interface.

For example, when the network device is the control node in the embodiment of FIG. 3, the communication interface 1104 is configured to send an in-situ flow detection request to an ingress node of a data flow in a network. When in-situ flow detection for the data flow is in-situ flow detection across tunnels of different types, the in-situ flow detection request indicates that the in-situ flow detection is the in-situ flow detection across tunnels of different types. For a specific implementation, refer to descriptions of step 301 in the embodiment of FIG. 3. Details are not described herein again.

For another example, when the network device is the ingress node of the data flow in the embodiment of FIG. 3, the communication interface 1104 is configured to receive an in-situ flow detection request delivered by a control node. When in-situ flow detection for the to-be-detected data flow is in-situ flow detection across tunnels of different types, the in-situ flow detection request indicates that the in-situ flow detection is the in-situ flow detection across tunnels of different types. The hybrid in-situ flow detection request includes a flow identifier of the to-be-detected data flow. For a specific implementation, refer to descriptions of step 302 in the embodiment of FIG. 3. Details are not described herein again.

For another example, when the network device is the first node in the transmission path of the data flow in the embodiment of FIG. 3, the communication interface 1104 is configured to receive a packet sent by a second node. The first node and the second node are two nodes in a network. The communication interface 1104 is further configured to send a packet including a second traffic detection header to a third node. For a specific implementation, refer to descriptions of steps 304 and 306 in the embodiment of FIG. 3. Details are not described herein again.

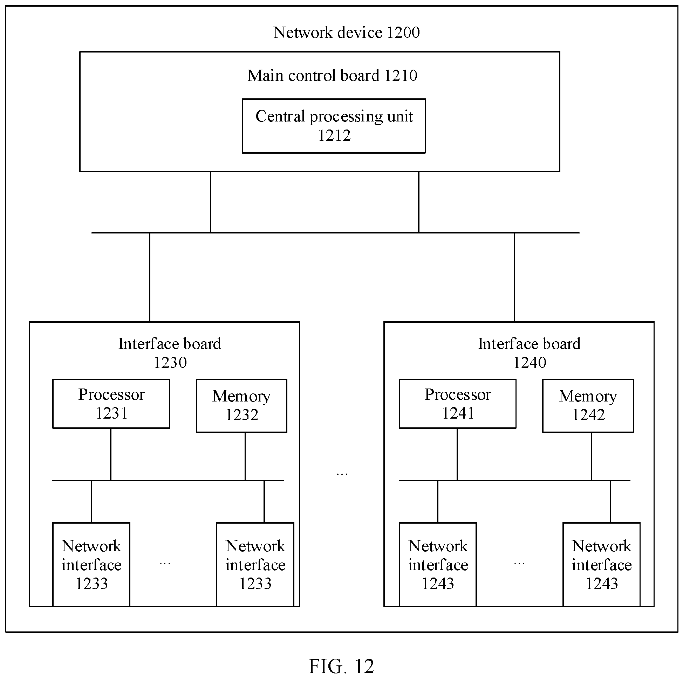

FIG. 12 is a schematic diagram of a structure of a network device according to an embodiment of this application. The network device may be any node in a packet forwarding path in a communication network in any one of the foregoing embodiments. The network device 1200 may be a switch, a router, or another network device that forwards a packet. In this embodiment, the network device 1200 includes a main control board 1210, an interface board 1230, and an interface board 1240. When there are a plurality of interface boards, a switching board (not shown in the figure) may be included. The switching board is configured to complete data exchange between the interface boards (the interface board is also referred to as a line card or a service board).

The main control board 1210 is configured to complete functions such as system management, device maintenance, and protocol processing. The interface board 1230 and the interface board 1240 are configured to provide various service interfaces (for example, a POS interface, a GE interface, and an ATM interface), and forward a packet. The main control board 1210 mainly includes three types of functional units: a system management and control unit, a system clock unit, and a system maintenance unit. The main control board 1210, the interface board 1230, and the interface board 1240 are connected to a system backplane through a system bus to implement interworking. The interface board 1230 includes one or more processors 1231. The processor 1231 is configured to: control and manage the interface board, communicate with a central processing unit on the main control board, and forward a packet. A memory 1232 on the interface board 1230 is configured to store a forwarding entry or a routing table, and the processor 1231 forwards a packet by searching the forwarding entry or the routing table stored in the memory 1232.

For example, when the network device is the control node in the embodiment of FIG. 3, the processor 1231 is configured to determine an in-situ flow detection request that needs to be sent to an ingress node of a to-be-detected data flow in a network. When in-situ flow detection for the data flow is in-situ flow detection across tunnels of different types, the in-situ flow detection request indicates that the in-situ flow detection is the in-situ flow detection across tunnels of different types. The being across tunnels of different types means that a tunnel type of an uplink tunnel of a node in a transmission path of the to-be-detected data flow is inconsistent with a tunnel type of a downlink tunnel of the node. For a specific implementation, refer to descriptions of step 301 in the embodiment of FIG. 3. Details are not described herein again.

For another example, when the network device is the ingress node of the data flow in the embodiment of FIG. 3, the processor 1231 is configured to add a first traffic detection header to a packet based on an in-situ flow detection request delivered by a control node, where the first traffic detection header indicates to perform in-situ flow detection on a data flow indicated by a flow identifier. When the in-situ flow detection for the to-be-detected data flow is in-situ flow detection across tunnels of different types, the in-situ flow detection request indicates that the in-situ flow detection is the in-situ flow detection across tunnels of different types. The being across tunnels of different types means that a tunnel type of an uplink tunnel of a node in a transmission path of the to-be-detected data flow is inconsistent with a tunnel type of a downlink tunnel of the node. The in-situ flow detection request includes the flow identifier of the to-be-detected data flow For a specific implementation, refer to descriptions of step 303 in the embodiment of FIG. 3. Details are not described herein again.

For another example, when the network device is the first node in the transmission path of the data flow in the embodiment of FIG. 3, the processor 1231 is configured to: when a packet includes a first traffic detection header and a tunnel type of an uplink tunnel of the packet is inconsistent with a tunnel type of a downlink tunnel of the packet, generate a second traffic detection header based on the first traffic detection header, and replace the first traffic detection header in the packet with the second traffic detection header. The second traffic detection header is a traffic detection header supported by the downlink tunnel, the uplink tunnel is a tunnel between a second node and the first node, and the downlink tunnel is a tunnel between the first node and a third node. For a specific implementation, refer to descriptions of step 305 in the embodiment of FIG. 3. Details are not described herein again.

For a function of a processor 1242 on the interface board 1240 in FIG. 12, refer to a function of a processor 1241. Details are not described herein again.

In addition, the interface board 1230 includes one or more network interfaces 1233, configured to: receive a packet sent by a previous-hop node, and send a processed packet to a next-hop node according to an instruction of the processor 1231. A specific implementation process is not described herein again.

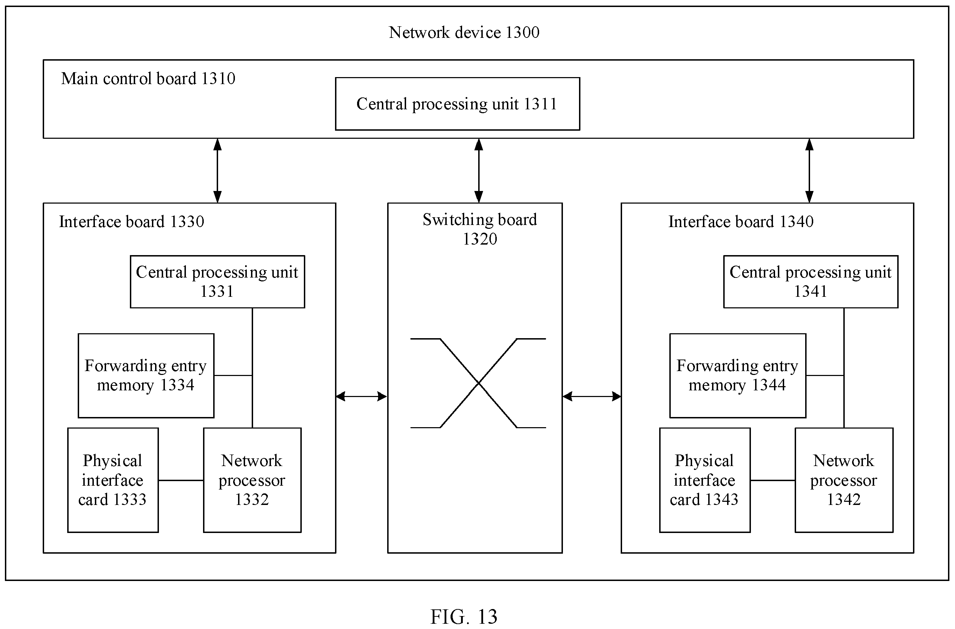

It may be understood that, as shown in FIG. 12, this embodiment includes a plurality of interface boards, and uses a distributed forwarding mechanism. In this mechanism, operations on the interface board 1240 are basically similar to operations on the interface board 1230. For brevity, details are not described again. In addition, it may be understood that, the processor 1231 and/or the processor 1241 in the interface board in FIG. 12 may be dedicated hardware or a chip, for example, a network processor or an application-specific integrated circuit (application-specific integrated circuit), to implement the foregoing functions. This implementation is a general manner in which a forwarding plane uses dedicated hardware or a chip for processing. For a specific implementation of using the dedicated hardware or the chip such as the network processor, refer to the embodiment shown in FIG. 13. In another implementation, the processor 1231 and/or the processor 1241 may also use a general-purpose processor, for example, a general-purpose CPU, to implement the functions described above as shown in FIG. 11.

In addition, it should be noted that there may be one or more main control boards. When there are a plurality of main control boards, the main control boards may include an active main control board and a standby main control board. There may be one or more interface boards, and a device having a stronger data processing capability provides more interface boards. If there are a plurality of interface boards, the plurality of interface boards can communicate with each other by using one or more switching boards, and the plurality of interface boards can jointly implement load balancing and redundancy backup. In a centralized forwarding architecture, the device may not need the switching board, and the interface board provides a function of processing service data of an entire system. In a distributed forwarding architecture, the device includes the plurality of interface boards. Data exchange between the plurality of interface boards may be implemented by using the switching board, to provide a large-capacity data exchange and processing capability. Therefore, a data access and processing capability of a network device in the distributed architecture is better than that of a device in the centralized architecture. A specific architecture that is to be used depends on a specific networking deployment scenario. This is not limited herein.

In a specific embodiment, the memory 1232 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk or another magnetic storage device, or any other medium that can be used to carry or store expected program code in a form of instructions or a data structure and that can be accessed by a computer. However, the memory 1232 is not limited thereto. The memory 1232 may exist independently, and is connected to the processor 1231 by using a communication bus. The memory 1232 may alternatively be integrated with the processor 1231.

The memory 1232 is configured to store program code, and the processor 1231 controls execution of the program code, to perform the packet forwarding method provided in the foregoing embodiments. The processor 1231 is configured to execute the program code stored in the memory 1232. The program code may include one or more software modules. The one or more software modules may be the software modules provided in any embodiment of FIG. 8 or FIG. 10.

In a specific embodiment, the network interface 1233 may use any transceiver-type apparatus, and is configured to communicate with another device or a communication network such as the Ethernet, a radio access network (radio access network, RAN), or a wireless local area network (wireless local area network, WLAN).

For example, when the network device is the control node in the embodiment of FIG. 3, the network interface 1233 is configured to send an in-situ flow detection request to an ingress node of a data flow in a network. When in-situ flow detection for the data flow is in-situ flow detection across tunnels of different types, the in-situ flow detection request indicates that the in-situ flow detection is the in-situ flow detection across tunnels of different types. For a specific implementation, refer to descriptions of step 301 in the embodiment of FIG. 3. Details are not described herein again.

For another example, when the network device is the ingress node of the data flow in the embodiment of FIG. 3, the network interface 1233 is configured to receive an in-situ flow detection request delivered by a control node. When in-situ flow detection for the to-be-detected data flow is in-situ flow detection across tunnels of different types, the in-situ flow detection request indicates that the in-situ flow detection is the in-situ flow detection across tunnels of different types. The hybrid in-situ flow detection request includes a flow identifier of the to-be-detected data flow. For a specific implementation, refer to descriptions of step 302 in the embodiment of FIG. 3. Details are not described herein again.

For another example, when the network device is the first node in the transmission path of the data flow in the embodiment of FIG. 3, the network interface 1233 is configured to receive a packet sent by a second node. The first node and the second node are two nodes in a network. The communication interface 1104 is further configured to send a packet including a second traffic detection header to a third node. For a specific implementation, refer to descriptions of steps 304 and 306 in the embodiment of FIG. 3. Details are not described herein again.

FIG. 13 is a schematic diagram of a structure of another network device according to an embodiment of this application. The network device may be any node in a packet forwarding path in a communication network provided in any embodiment of the foregoing figures. The network device 1300 may be a switch, a router, or another network device that forwards a packet. In this embodiment, the network device 1300 includes a main control board 1310, an interface board 1330, a switching board 1320, and an interface board 1340. The main control board 1310 is configured to complete functions such as system management, device maintenance, and protocol processing. The switching board 1320 is configured to complete data exchange between interface boards (the interface board is also referred to as a line card or a service board). The interface board 1330 and the interface board 1340 are configured to: provide various service interfaces (for example, a POS interface, a GE interface, and an ATM interface), and forward a data packet. A control plane includes management and control units on the main control board 1310 and management and control units on the interface board 1330 and the interface board 1340. The main control board 1310 mainly includes three types of functional units: a system management and control unit, a system clock unit, and a system maintenance unit. The main control board 1310, the interface board 1330, the interface board 1340, and the switching board 1320 are connected to a system backplane through a system bus to implement interworking. A central processing unit 1331 on the interface board 1330 is configured to: control and manage the interface board, and communicate with a central processing unit on the main control board. A memory 1334 is configured to store a forwarding entry or a routing table on the interface board 1330. A network processor 1332 forwards a packet by searching the forwarding entry or the routing table stored in the memory 1334.

In addition, in this embodiment of this application, a physical interface card 1333 is further configured to send the link state packet in step 306 to a control node, so that the control node can implement in-situ flow detection based on the link state packet. A specific implementation process is not described herein again.

It may be understood that, as shown in FIG. 13, this embodiment includes a plurality of interface boards, and uses a distributed forwarding mechanism. In this mechanism, operations on the interface board 1340 are basically similar to operations on the interface board 1330. For brevity, details are not described again. In addition, as described above, functions of the network processor 1332 and a network processor 1342 in FIG. 13 may be replaced with those of an application-specific integrated circuit (application-specific integrated circuit).

In addition, it should be noted that there may be one or more main control boards. When there are a plurality of main control boards, the main control boards may include an active main control board and a standby main control board. There may be one or more interface boards, and a device having a stronger data processing capability provides more interface boards. There may also be one or more physical interface cards on the interface board. There may be no switching board or one or more switching boards. When there are a plurality of switching boards, the plurality of interface boards can jointly implement load balancing and redundancy backup. In a centralized forwarding architecture, the device may not need the switching board, and the interface board provides a function of processing service data of an entire system. In a distributed forwarding architecture, the device may include at least one switching board. Data exchange between a plurality of interface boards is implemented by using the switching board, to provide a large-capacity data exchange and processing capability. Therefore, a data access and processing capability of a network device in the distributed architecture is better than that of a device in the centralized architecture. A specific architecture that is to be used depends on a specific networking deployment scenario. This is not limited herein.

All or a part of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing content is not intended to limit embodiments of this application. Any modification, equivalent replacement, or improvement made without departing from the spirit and principle of embodiments of this application shall fall within the protection scope of embodiments of this application.

## Claims

1. An in-situ flow detection method, wherein the method comprises:
receiving, by a first node, a packet sent by a second node, wherein the first node and the second node are two nodes in a network; and
when the packet comprises a first traffic detection header and a tunnel type of an uplink tunnel of the packet is inconsistent with a tunnel type of a downlink tunnel of the packet, generating, by the first node, a second traffic detection header based on the first traffic detection header, replacing the first traffic detection header in the packet with the second traffic detection header, and sending a packet comprising the second traffic detection header to a third node, wherein
the second traffic detection header is a traffic detection header supported by the downlink tunnel, the uplink tunnel is a tunnel between the second node and the first node, and the downlink tunnel is a tunnel between the first node and the third node.

2. The method according to claim 1, wherein after the receiving, by a first node, a packet sent by a second node, the method further comprises:
determining whether the packet comprises the first traffic detection header; and
when the packet comprises the first traffic detection header, determining whether the tunnel type of the uplink tunnel of the packet is consistent with the tunnel type of the downlink tunnel of the packet.

3. The method according to claim 2, wherein the packet comprises a first flag field, and a value of the first flag field indicates whether in-situ flow detection is in-situ flow detection across tunnels of different types; and
the method further comprises:
when the value of the first flag field indicates that the in-situ flow detection is the in-situ flow detection across tunnels of different types, performing an operation of the determining whether the tunnel type of the uplink tunnel of the packet is consistent with the tunnel type of the downlink tunnel of the packet.

4. The method according to claim 3, wherein the method further comprises:
when the value of the first flag field indicates that the in-situ flow detection is in-situ flow detection for tunnels of a same type, skipping performing the operation of the determining whether the tunnel type of the uplink tunnel of the packet is consistent with the tunnel type of the downlink tunnel of the packet, updating, by the first node, a value of a time to live TTL field in the first traffic detection header, and sending a packet comprising the updated first traffic detection header to the third node.

5. The method according to claim 2, wherein the first node comprises an uplink management chip and a microcode chip;
after the receiving, by a first node, a packet sent by a second node, the method further comprises:
adding, by the uplink management chip, an internal forwarding header to the packet, wherein the internal forwarding header comprises a second flag field, and a value of the second flag field indicates whether the packet comprises the first traffic detection header; and
the determining whether the packet comprises the first traffic detection header comprises:
determining, by the microcode chip based on the value of the second flag field, whether the packet comprises the first traffic detection header.

6. The method according to claim 5, wherein
when the value of the second flag field indicates that the packet comprises the first traffic detection header, the internal forwarding header further comprises a third flag field, and a value of the third flag field indicates the tunnel type of the uplink tunnel; and
the determining whether the tunnel type of the uplink tunnel of the packet is consistent with the tunnel type of the downlink tunnel of the packet comprises:
determining, by the microcode chip based on the value of the third flag field, whether the tunnel type of the uplink tunnel of the packet is consistent with the tunnel type of the downlink tunnel of the packet.

7. The method according to any one of claims 1 to 3 and claims 5 and 6, wherein the method further comprises:
when the packet comprises the first traffic detection header and the tunnel type of the uplink tunnel of the packet is inconsistent with the tunnel type of the downlink tunnel of the packet, determining a link state packet based on the first traffic detection header, wherein the link state packet comprises a fourth flag field, and a value of the fourth flag field indicates that an uplink tunnel type of the first node and a downlink tunnel type of the first node are inconsistent; and
sending the link state packet to a control node.

8. The method according to any one of claims 1 to 3 and claims 5 to 7, wherein the generating, by the first node, a second traffic detection header based on the first traffic detection header comprises:
determining a difference between a value of a time to live TTL field in the first traffic detection header and a reference value as a value of a TTL field in the second traffic detection header; and
copying a value of another field that is in the first traffic detection header and that is the same as a field in the second traffic detection header to the second traffic detection header.

9. The method according to claim 2, wherein after the determining whether the tunnel type of the uplink tunnel of the packet is consistent with the tunnel type of the downlink tunnel of the packet, the method further comprises:
when the tunnel type of the uplink tunnel of the packet is consistent with the tunnel type of the downlink tunnel of the packet, updating, by the first node, a value of a time to live TTL field in the first traffic detection header, and sending a packet comprising the updated first traffic detection header to the third node.

10. The method according to any one of claims 1 to 9, wherein the first traffic detection header indicates to perform IFIT detection or internet protocol flow performance measurement IPFPM detection on a to-be-detected data flow.

11. The method according to claim 3 or 4, wherein the first flag field is a field in the first traffic detection header.

12. The method according to claim 11, wherein when the first traffic detection header indicates that the in-situ flow detection is in-situ flow information telemetry IFIT detection, the first flag field is a field in a flow instruction extension header FIEH comprised in the first traffic detection header.

13. The method according to any one of claims 1 to 12, wherein the tunnel type comprises a multiprotocol label switching MPLS tunnel and a segment routing over internet protocol version 6 SRv6 tunnel.

14. An in-situ flow detection method, wherein the method comprises:
sending, by a control node, an in-situ flow detection request to an ingress node of a to-be-detected data flow in a network, wherein
when in-situ flow detection for the data flow is in-situ flow detection across tunnels of different types, the in-situ flow detection request indicates that the in-situ flow detection is the in-situ flow detection across tunnels of different types, and the being across tunnels of different types means that a tunnel type of an uplink tunnel of a node in a transmission path of the to-be-detected data flow is inconsistent with a tunnel type of a downlink tunnel of the node.

15. The method according to claim 14, wherein when the in-situ flow detection for the data flow is in-situ flow detection for tunnels of a same type, the in-situ flow detection request indicates that the in-situ flow detection is the in-situ flow detection for tunnels of a same type.

16. The method according to claim 14 or 15, wherein the method further comprises:
obtaining, by the control node, a tunnel type of a downlink tunnel of each node in the transmission path of the data flow; and
when there are different tunnel types in the tunnel types of the downlink tunnels of the nodes, determining that the in-situ flow detection for the data flow is the in-situ flow detection across tunnels of different types.

17. The method according to any one of claims 14 to 16, wherein the in-situ flow detection comprises in-situ flow information telemetry IFIT detection or internet protocol flow performance measurement IPFPM detection.

18. The method according to any one of claims 14 to 17, wherein the tunnel type comprises a multiprotocol label switching MPLS tunnel and a segment routing over internet protocol version 6 SRv6 tunnel.

19. An in-situ flow detection method, wherein the method comprises:
receiving, by an ingress node of a network, an in-situ flow detection request delivered by a control node, wherein when in-situ flow detection for a to-be-detected data flow is in-situ flow detection across tunnels of different types, the in-situ flow detection request indicates that the in-situ flow detection is the in-situ flow detection across tunnels of different types, the being across tunnels of different types means that a tunnel type of an uplink tunnel of a node in a transmission path of the to-be-detected data flow is inconsistent with a tunnel type of a downlink tunnel of the node, and the in-situ flow detection request comprises a flow identifier of the to-be-detected data flow; and
when receiving a packet indicated by the flow identifier, adding, by the ingress node, a first traffic detection header to the packet, wherein the first traffic detection header indicates to perform the in-situ flow detection on the data flow indicated by the flow identifier.

20. The method according to claim 19, wherein if the in-situ flow detection request indicates that the in-situ flow detection is the in-situ flow detection across tunnels of different types, a packet obtained through processing by the ingress node comprises a first flag field, and a value of the first flag field indicates that the in-situ flow detection is the in-situ flow detection across tunnels of different types.

21. The method according to claim 20, wherein if the in-situ flow detection request indicates that the in-situ flow detection is in-situ flow detection for tunnels of a same type, the value of the first flag field added to the packet indicates that the in-situ flow detection is the in-situ flow detection for tunnels of a same type.

22. The method according to any one of claims 19 to 21, wherein the first traffic detection header indicates to perform IFIT detection or internet protocol flow performance measurement IPFPM detection on the to-be-detected data flow.

23. The method according to claim 20 or 21, wherein the first flag field is a field in the first traffic detection header.

24. The method according to claim 23, wherein when the first traffic detection header indicates that the in-situ flow detection is in-situ flow information telemetry IFIT detection, the first flag field is a field in a flow instruction extension header FIEH comprised in the first traffic detection header.

25. The method according to any one of claims 19 to 24, wherein the tunnel type comprises a multiprotocol label switching MPLS tunnel and a segment routing over internet protocol version 6 SRv6 tunnel.

26. A network device, applied to a network system, wherein the network system comprises a control node, a first node, a second node, and a third node, the first node, the second node, and the third node are three nodes in a transmission path of a to-be-detected data flow, the network device is the first node, and the network device comprises:
a receiving module, configured to receive a packet sent by the second node; and
a generation module, configured to: when the packet comprises a first traffic detection header and a tunnel type of an uplink tunnel of the packet is inconsistent with a tunnel type of a downlink tunnel of the packet, generate, by the first node, a second traffic detection header based on the first traffic detection header, and replace the first traffic detection header in the packet with the second traffic detection header; and a sending module, configured to send a packet comprising the second traffic detection header to the third node, wherein
the second traffic detection header is a traffic detection header supported by the downlink tunnel, the uplink tunnel is a tunnel between the second node and the first node, and the downlink tunnel is a tunnel between the first node and the third node.

27. The network device according to claim 26, wherein the network device further comprises a judging module, configured to:
after the packet sent by the second node is received, determine whether the packet comprises the first traffic detection header; and
when the packet comprises the first traffic detection header, determine whether the tunnel type of the uplink tunnel of the packet is consistent with the tunnel type of the downlink tunnel of the packet.

28. The network device according to claim 27, wherein the packet comprises a first flag field, and a value of the first flag field indicates whether in-situ flow detection is in-situ flow detection across tunnels of different types; and
the judging module is configured to: when the value of the first flag field indicates that the in-situ flow detection is the in-situ flow detection across tunnels of different types, determine whether the tunnel type of the uplink tunnel of the packet is consistent with the tunnel type of the downlink tunnel of the packet.

29. The network device according to claim 28, wherein
the judging module is further configured to: when the value of the first flag field indicates that the in-situ flow detection is in-situ flow detection for tunnels of a same type, skip performing an operation of determining whether the tunnel type of the uplink tunnel of the packet is consistent with the tunnel type of the downlink tunnel of the packet, and update, by the first node, a value of a time to live TTL field in the first traffic detection header; and
the sending module is further configured to send a packet comprising the updated first traffic detection header to the third node.

30. The network device according to claim 27, wherein
the network device further comprises:
an addition module, configured to add an internal forwarding header to the packet, wherein the internal forwarding header comprises a second flag field, and a value of the second flag field indicates whether the packet comprises a traffic detection header; and
the judging module is configured to:
determine, based on the value of the second flag field, whether the packet comprises the first traffic detection header.

31. The network device according to claim 30, wherein
when the value of the second flag field indicates that the packet comprises the first traffic detection header, the internal forwarding header further comprises a third flag field, and a value of the third flag field indicates the tunnel type of the uplink tunnel; and
the judging module is configured to:
determine, based on the value of the third flag field, whether the tunnel type of the uplink tunnel of the packet is consistent with the tunnel type of the downlink tunnel of the packet.

32. The network device according to any one of claims 26 to 28 and claims 30 and 31, wherein the network device further comprises:
a determining module, configured to: when the packet comprises the first traffic detection header and the tunnel type of the uplink tunnel of the packet is inconsistent with the tunnel type of the downlink tunnel of the packet, determine a link state packet based on the first traffic detection header, wherein the link state packet comprises a fourth flag field, and a value of the fourth flag field indicates that an uplink tunnel type of the first node and a downlink tunnel type of the first node are inconsistent; and
the sending module is further configured to send the link state packet to the control node.

33. The network device according to any one of claims 26 to 28 and claims 30 to 32, wherein the generation module is configured to:
determine a difference between a value of a time to live TTL field in the first traffic detection header and a reference value as a value of a TTL field in the second traffic detection header; and
copy a value of another field that is in the first traffic detection header and that is the same as a field in the second traffic detection header to the second traffic detection header.

34. The network device according to claim 27, wherein the network device further comprises:
an updating module, configured to: after whether the tunnel type of the uplink tunnel of the packet is consistent with the tunnel type of the downlink tunnel of the packet is determined, update a value of a time to live TTL field in the first traffic detection header when the tunnel type of the uplink tunnel of the packet is consistent with the tunnel type of the downlink tunnel of the packet; and
the sending module is further configured to send a packet comprising the updated first traffic detection header to the third node.

35. The network device according to any one of claims 26 to 34, wherein the first traffic detection header indicates to perform IFIT detection or internet protocol flow performance measurement IPFPM detection on the to-be-detected data flow.

36. The network device according to claim 28 or 29, wherein the first flag field is a field in the first traffic detection header.

37. The network device according to claim 36, wherein when the first traffic detection header indicates that the in-situ flow detection is in-situ flow information telemetry IFIT detection, the first flag field is a field in a flow instruction extension header FIEH comprised in the first traffic detection header.

38. The method according to any one of claims 26 to 37, wherein the tunnel type comprises a multiprotocol label switching MPLS tunnel and a segment routing over internet protocol version 6 SRv6 tunnel.

39. A network device, applied to a network system, wherein the network system comprises a control node, a first node, a second node, and a third node, the first node, the second node, and the third node are three nodes in a transmission path of a to-be-detected data flow, the network device is the control node, and the network device comprises:
a sending module, configured to send an in-situ flow detection request to an ingress node of the data flow in the network, wherein
when in-situ flow detection for the data flow is in-situ flow detection across tunnels of different types, the in-situ flow detection request indicates that the in-situ flow detection is the in-situ flow detection across tunnels of different types, and the being across tunnels of different types means that a tunnel type of an uplink tunnel of a node in the transmission path of the to-be-detected data flow is inconsistent with a tunnel type of a downlink tunnel of the node.

40. The network device according to claim 39, wherein when the in-situ flow detection for the data flow is in-situ flow detection for tunnels of a same type, the in-situ flow detection request indicates that the in-situ flow detection is the in-situ flow detection for tunnels of a same type.

41. The network device according to claim 40, wherein the network device further comprises:
an obtaining module, configured to obtain a tunnel type of a downlink tunnel of each node in the transmission path of the data flow; and
a determining module, further configured to: when there are different tunnel types in the tunnel types of the downlink tunnels of the nodes, determine that the in-situ flow detection for the data flow is the in-situ flow detection across tunnels of different types.

42. The network device according to any one of claims 39 to 31, wherein the in-situ flow detection comprises in-situ flow information telemetry IFIT detection or internet protocol flow performance measurement IPFPM detection.

43. The network device according to any one of claims 39 to 42, wherein the tunnel type comprises a multiprotocol label switching MPLS tunnel and a segment routing over internet protocol version 6 SRv6 tunnel.

44. A network device, applied to a network system, wherein the network system comprises a control node, a first node, a second node, and a third node, the first node, the second node, and the third node are three nodes in a transmission path of a to-be-detected data flow, the network device is an ingress node of the data flow in the network system, and the network device comprises:
a receiving module, configured to receive an in-situ flow detection request delivered by the control node, wherein when in-situ flow detection for the to-be-detected data flow is in-situ flow detection across tunnels of different types, the in-situ flow detection request indicates that the in-situ flow detection is the in-situ flow detection across tunnels of different types, the being across tunnels of different types means that a tunnel type of an uplink tunnel of a node in the transmission path of the to-be-detected data flow is inconsistent with a tunnel type of a downlink tunnel of the node, and the hybrid in-situ flow detection request comprises a flow identifier of the to-be-detected data flow; and
an addition module, configured to: when a packet indicated by the flow identifier is received, add a first traffic detection header to the packet, wherein the first traffic detection header indicates to perform the in-situ flow detection on the data flow indicated by the flow identifier.

45. The network device according to claim 44, wherein if the in-situ flow detection request indicates that the in-situ flow detection is the in-situ flow detection across tunnels of different types, a packet obtained through processing by the ingress node comprises a first flag field, and a value of the first flag field indicates that the in-situ flow detection is the in-situ flow detection across tunnels of different types.

46. The network device according to claim 45, wherein if the in-situ flow detection request indicates that the in-situ flow detection is in-situ flow detection for tunnels of a same type, the value of the first flag field added to the packet indicates that the in-situ flow detection is the in-situ flow detection for tunnels of a same type.

47. The network device according to any one of claims 44 to 46, wherein the first traffic detection header indicates to perform IFIT detection or internet protocol flow performance measurement IPFPM detection on the to-be-detected data flow.

48. The network device according to claim 45 or 46, wherein the first flag field is a field in the first traffic detection header.

49. The network device according to claim 48, wherein when the first traffic detection header indicates that the in-situ flow detection is in-situ flow information telemetry IFIT detection, the first flag field is a field in a flow instruction extension header FIEH comprised in the first traffic detection header.

50. The network device according to any one of claims 44 to 49, wherein the tunnel type comprises a multiprotocol label switching MPLS tunnel and a segment routing over internet protocol version 6 SRv6 tunnel.

51. An in-situ flow detection system, wherein the system comprises a control node, an ingress node of a data flow, and a first node, wherein the first node is a next-hop node of the ingress node;
the control node is configured to send an in-situ flow detection request to the ingress node, wherein when in-situ flow detection for the data flow is in-situ flow detection across tunnels of different types, the in-situ flow detection request indicates that the in-situ flow detection is the in-situ flow detection across tunnels of different types, and the being across tunnels of different types means that a tunnel type of an uplink tunnel of a node in a transmission path of a to-be-detected data flow is inconsistent with a tunnel type of a downlink tunnel of the node;
the ingress node is configured to: receive the in-situ flow detection request delivered by the control node, wherein the in-situ flow detection request comprises a flow identifier of the to-be-detected data flow, and when receiving a packet indicated by the flow identifier, add, by the ingress node, a first traffic detection header to the packet, wherein the first traffic detection header indicates to perform the in-situ flow detection on the data flow indicated by the flow identifier; and
the first node is configured to: receive a packet sent by the ingress node, when the packet comprises a first traffic detection header and a tunnel type of an uplink tunnel of the packet is inconsistent with a tunnel type of a downlink tunnel of the packet, generate, by the first node, a second traffic detection header based on the first traffic detection header, replace the first traffic detection header in the packet with the second traffic detection header, wherein the second traffic detection header is a traffic detection header supported by the downlink tunnel, the uplink tunnel is a tunnel between the ingress node and the first node, the downlink tunnel is a tunnel between the first node and a third node, and the third node is a next hop for the first node to forward the packet, and send, by the first node, a packet comprising the second traffic detection header to the third node.

52. A chip, comprising a processor and a communication interface, wherein
the chip is configured to implement the method according to any one of claims 1 to 13, claims 14 to 18, or claims 19 to 25.
